# EUROPEAN PATENT APPLICATION

(11) **EP 4 625 905 A1**
(43) Date of publication of application: **01.10.2025**
(21) Application number: 22966245.7
(22) Date of filing: 25.11.2022
(51) Int. Cl.: H04L 27/00

(54) **METHOD FOR WIRELESS COMMUNICATION, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: RGTH
(86) International application number: PCT/CN2022/134388
(87) International publication number: WO 2024/108556

(57) **Abstract**

Provided are a method for wireless communication, a terminal device, and a network device. The method comprises: a terminal device determines a target receiving state, wherein the terminal device comprises a first receiver and a second receiver, the power consumption of the second receiver is less than the power consumption of the first receiver, the target receiving state is a first receiving state or a second receiving state, the first receiving state corresponds to the first receiver being turned off or in a deep sleep state, and the second receiving state corresponds to the first receiver being turned on and in a normal transceiving state. According to the technical solution of embodiments of the present application, signal receiving can be carried out by using different target receiving states in different scenarios, and the receiving performance and power consumption of a terminal device are both taken into account.

## Description

### TECHNICAL FIELD

This application relates to the field of communications technologies, and more specifically, to a method for wireless communication, a terminal device, and a network device.

### BACKGROUND

In some communications systems (for example, a new radio (new radio, NR) system), a terminal device may include a plurality of receivers, and power consumption of different receivers is different. The terminal device may support different receiving states according to a state of a receiver used by the terminal device. In different receiving states, receiving performance of the terminal device and power consumption generated by the terminal device may be different. Therefore, how the terminal device should determine different receiving states is a problem to be solved.

### SUMMARY

This application provides a method for wireless communication, a terminal device, and a network device. The following describes the aspects involved in this application.

According to a first aspect, a method for wireless communication is provided, including: determining, by a terminal device, a target receiving state, where the terminal device includes a first receiver and a second receiver, power consumption of the second receiver is less than power consumption of the first receiver, the target receiving state is a first receiving state or a second receiving state; where in the first receiving state, the first receiver is turned off or in a deep sleep state; and in the second receiving state, the first receiver is turned on and in a normal transceiving state.

According to a second aspect, a method for wireless communication is provided, including: triggering, by a terminal device, to transmit first information to a network device, where the first information is used to indicate a detection or measurement result of a first signal and/or is used to indicate that the terminal device meets a first condition; and receiving, by the terminal device, a target receiving state configured by the network device, where the terminal device includes a first receiver and a second receiver, power consumption of the second receiver is less than power consumption of the first receiver, the target receiving state is a first receiving state or a second receiving state; where in the first receiving state, the first receiver is turned off or in a deep sleep state; and in the second receiving state, the first receiver is turned on and in a normal transceiving state.

According to a third aspect, a method for wireless communication is provided, including: receiving, by a network device, a target receiving state transmitted by a terminal device, where the terminal device includes a first receiver and a second receiver, power consumption of the second receiver is less than power consumption of the first receiver, the target receiving state is a first receiving state or a second receiving state; where in the first receiving state, the first receiver is turned off or in a deep sleep state; and in the second receiving state, the first receiver is turned on and in a normal transceiving state.

According to a fourth aspect, a method for wireless communication is provided, including: receiving, by a network device, first information transmitted by a terminal device, where the first information is used to indicate a detection or measurement result of a first signal and/or is used to indicate that the terminal device meets a first condition; and configuring, by the network device, a target receiving state for the terminal device, where the terminal device includes a first receiver and a second receiver, power consumption of the second receiver is less than power consumption of the first receiver, the target receiving state is a first receiving state or a second receiving state; where in the first receiving state, the first receiver is turned off or in a deep sleep state; and in the second receiving state, the first receiver is turned on and in a normal transceiving state.

According to a fifth aspect, a terminal device is provided, including: a determining module, configured to determine a target receiving state, where the terminal device includes a first receiver and a second receiver, power consumption of the second receiver is less than power consumption of the first receiver, the target receiving state is a first receiving state or a second receiving state; where in the first receiving state, the first receiver is turned off or in a deep sleep state; and in the second receiving state, the first receiver is turned on and in a normal transceiving state.

According to a sixth aspect, a terminal device is provided, including: a triggering module, configured to trigger to transmit first information to a network device, where the first information is used to indicate a detection or measurement result of a first signal and/or is used to indicate that the terminal device meets a first condition; and a first receiving module, configured to receive a target receiving state configured by the network device, where the terminal device includes a first receiver and a second receiver, power consumption of the second receiver is less than power consumption of the first receiver, the target receiving state is a first receiving state or a second receiving state; where in the first receiving state, the first receiver is turned off or in a deep sleep state; and in the second receiving state, the first receiver is turned on and in a normal transceiving state.

According to a seventh aspect, a network device is provided, including: a receiving module, configured to receive a target receiving state transmitted by a terminal device, where the terminal device includes a first receiver and a second receiver, power consumption of the second receiver is less than power consumption of the first receiver, the target receiving state is a first receiving state or a second receiving state; where in the first receiving state, the first receiver is turned off or in a deep sleep state; and in the second receiving state, the first receiver is turned on and in a normal transceiving state.

According to an eighth aspect, a network device is provided, including: a receiving module, configured to receive first information transmitted by a terminal device, where the first information is used to indicate a detection or measurement result of a first signal and/or is used to indicate that the terminal device meets a first condition; and a configuring module, configured to configure a target receiving state for the terminal device, where the terminal device includes a first receiver and a second receiver, power consumption of the second receiver is less than power consumption of the first receiver, the target receiving state is a first receiving state or a second receiving state; where in the first receiving state, the first receiver is turned off or in a deep sleep state; and in the second receiving state, the first receiver is turned on and in a normal transceiving state.

According to a ninth aspect, a terminal device is provided, including a processor, a memory, and a communications interface, where the memory is configured to store one or more computer programs, and the processor is configured to invoke the computer program in the memory to cause the terminal device to execute some or all of steps in the method according to any one of the first aspect to the second aspect.

According to a tenth aspect, a network device is provided, including a processor, a memory, and a communications interface, where the memory is configured to store one or more computer programs, and the processor is configured to invoke the computer program in the memory to cause the network device to execute some or all of steps in the method according to any one of the third aspect to the fourth aspect.

According to an eleventh aspect, an embodiment of this application provides a communications system, where the system includes the foregoing terminal device and/or the foregoing network device. In another possible design, the system may further include another device that interacts with the terminal device or the network device in the solutions provided in embodiments of this application.

According to a twelfth aspect, an embodiment of this application provides a computer-readable storage medium, where the computer-readable storage medium stores a computer program, and the computer program causes a terminal device and/or a network device to execute some or all of steps in the method according to any one of the foregoing aspects.

According to a thirteenth aspect, an embodiment of this application provides a computer program product, where the computer program product includes a non-transitory computer-readable storage medium that stores a computer program, and the computer program may be operated to cause a terminal device and/or a network device to execute some or all of steps in the method according to any one of the foregoing aspects. In some implementations, the computer program product may be a software installation package.

According to a fourteenth aspect, an embodiment of this application provides a chip, where the chip includes a memory and a processor, and the processor may invoke a computer program from the memory and run the computer program, to implement some or all of steps described in the method according to any one of the foregoing aspects.

In embodiments of this application, in a case in which a terminal device includes a first receiver and a second receiver, the terminal device may support a first receiving state and a second receiving state, and the terminal device can independently determine a target receiving state (the target receiving state is the first receiving state or the second receiving state), to receive a signal according to the determined target receiving state. Based on this, according to the technical solutions in embodiments of this application, a signal can be received by using different target receiving states in different scenarios, thereby being conductive to balancing receiving performance and power consumption of the terminal device.

### BRIEF DESCRIPTION OF DRAWINGS

FIG. 1 is an example diagram of a system architecture of a wireless communications system to which embodiments of this application may be applied.
FIG. 2 is an example diagram of a position of a PF within a paging DRX cycle and a position of a PO within the PF.
FIG. 3 is a schematic structural diagram of a terminal device that carries an LP-WUS receiver.
FIG. 4 is a schematic flowchart of a method for wireless communication according to an embodiment of this application.
FIG. 5 is a schematic flowchart of a method for wireless communication according to another embodiment of this application.
FIG. 6 is a schematic flowchart of a method for wireless communication according to still another embodiment of this application.
FIG. 7 is a schematic flowchart of a method for wireless communication according to yet another embodiment of this application.
FIG. 8 is a schematic structural diagram of a terminal device according to an embodiment of this application.
FIG. 9 is a schematic structural diagram of a terminal device according to another embodiment of this application.
FIG. 10 is a schematic structural diagram of a network device according to an embodiment of this application.
FIG. 11 is a schematic structural diagram of a network device according to another embodiment of this application.
FIG. 12 is a schematic structural diagram of a communications apparatus according to an embodiment of this application.

### DESCRIPTION OF EMBODIMENTS

### Communications system architecture

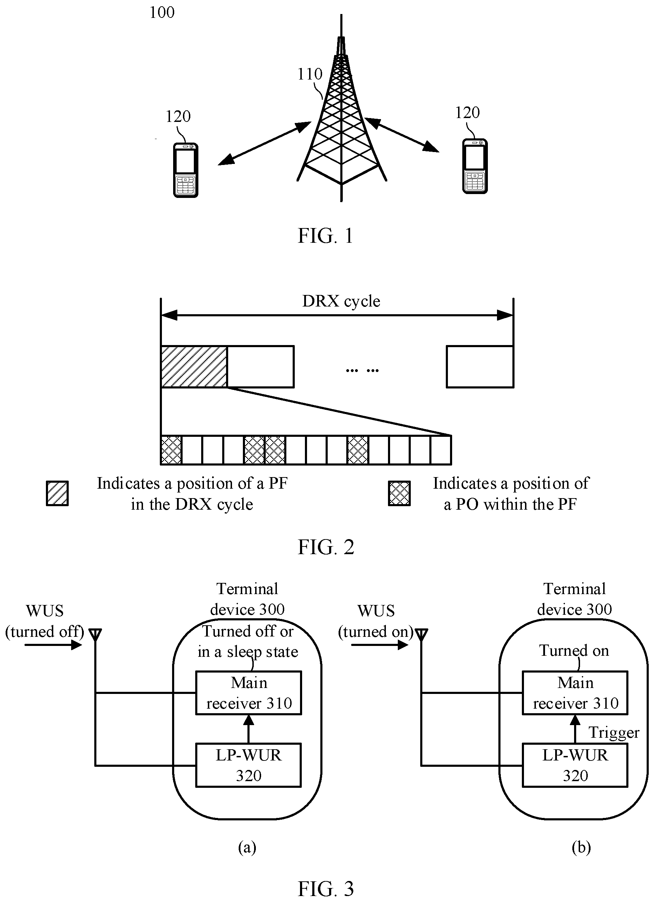

FIG. 1 is an example diagram of a system architecture of a wireless communications system 100 to which embodiments of this application may be applied. The wireless communications system 100 may include a network device 110 and a terminal device 120. The network device 110 may be a device that communicates with the terminal device 120. The network device 110 may provide communication coverage for a specific geographical area, and may communicate with the terminal device 120 located in the coverage.

FIG. 1 exemplarily shows one network device and two terminal devices. Optionally, the wireless communications system 100 may include a plurality of network devices, and another quantity of terminal devices may be included in coverage of each network device. This is not limited in embodiments of this application.

Optionally, the wireless communications system 100 may further include another network entity such as a network controller or a mobility management entity. This is not limited in embodiments of this application.

It should be understood that the technical solutions in embodiments of this application may be applied to various communications systems, for example, a 5th generation (5th generation, 5G) system or new radio (new radio, NR), a long-term evolution (long term evolution, LTE) system, an LTE frequency division duplex (frequency division duplex, FDD) system, and LTE time division duplex (time division duplex, TDD). The technical solutions provided in this application may also be applied to a future communications system, such as a sixth generation mobile communications system or a satellite communications system.

The technical solutions in embodiments of this application may be applied to a carrier aggregation (carrier aggregation, CA) scenario, a dual connectivity (dual connectivity, DC) scenario, or a standalone (standalone, SA) networking scenario (for example, a scenario in which NR is independently deployed).

The terminal device in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, a UE may function as a base station. For example, the UE may function as a scheduling entity, which provides a sidelink signal between UEs in V2X, D2D, or the like. For example, a cellular phone and a vehicle communicate with each other by using a sidelink signal. A cellular phone and a smart home device communicate with each other, without relaying a communication signal by using a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or may be replaced with the following names, for example: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be fixed or mobile. For example, a helicopter or an unmanned aerial vehicle may be configured to function as a mobile base station, and one or more cells may move depending on a location of the mobile base station. In other examples, a helicopter or an unmanned aerial vehicle may be configured to serve as a device that communicates with another base station.

In some deployments, the network device in embodiments of this application may be a CU or a DU, or the network device includes a CU and a DU. A gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may also be implemented by software functions running on hardware, or by virtualization functions instantiated on a platform (for example, a cloud platform).

### 5G application scenario

At present, with people's requirement on a speed, a latency, high-speed mobility, and energy efficiency, as well as diversity and complexity of services in future life, the 3rd generation partnership project (3rd generation partnership project, 3GPP) international standard organization starts to develop 5G. Main scenarios in which 5G is applied include: enhanced mobile broadband (enhanced mobile broadband, eMBB), ultra-reliable low-latency communications (ultra reliable low latency communications, URLLC), and massive machine-type communications (massive machine type communications, mMTC).

On the one hand, eMBB still aims to obtain multimedia content, services, and data for users. Requirements for eMBB increase rapidly. On the other hand, because eMBB may be deployed in different scenarios, such as an indoor scenario, an urban scenario, and a rural scenario, a difference between capabilities and requirements of eMBB is relatively large. Therefore, a specific deployment scenario needs to be analyzed in detail.

A key feature of URLLC is a low latency. In this scenario, a connection latency may reach 1 millisecond or less, and a highly reliable connection in a case of high-speed movement may be supported. During high-speed movement at 500 kilometers per hour, reliability may reach 99.999%. Typical applications of URLLC include factory automation, electric power automation, remote medical operations (such as surgery), traffic safety assurance, and the like.

Typical features of mMTC include high connection density, a small data volume, latency-insensitive services, and low costs and a long service life of modules. Based on this, mMTC may include one or more of the following communication: communication of an industrial wireless sensor network, communication in a video surveillance scenario, or communication of a wearable device.

### Radio resource control (radio resource control, RRC) state

Currently, three RRC states of a terminal device are defined in a protocol: an RRC connected (RRC_CONNECTED) state, an RRC idle (RRC_IDLE) state, and an RRC inactive (RRC_INACTIVE) state.

The RRC connected state may refer to a state in which the terminal device does not perform RRC release after completing a random access procedure. There is an RRC connection between the terminal device and a network device, and there is an access stratum (access stratum, AS) context of the terminal device between the network device and the terminal device. In the RRC connected state, the terminal device may perform data transmission with the network device, for example, downlink data transmission and/or uplink data transmission. Alternatively, the terminal device may perform transmission of a specific data channel and/or a specific control channel of the terminal device with the network device, to transmit specific information or unicast information of the terminal device.

In the RRC connected state, the network device may determine cell-level location information of the terminal device, that is, the network device may determine a cell to which the terminal device belongs. In addition, mobility management of the terminal device in the RRC connected state may be controlled by the network device. That is, mobility of the terminal device in the RRC connected state is mobility controlled by the network device.

The RRC idle state refers to a state in which the terminal device resides on a cell but does not perform random access. The terminal device generally is in the RRC idle state after being powered on or after releasing RRC. In the RRC idle state, there is no RRC connection between the terminal device and the network device, the network device does not store the AS context of the terminal device, and no connection for the terminal device is established between the network device and a core network. If the terminal device needs to switch from the RRC idle state to the RRC connected state, an RRC connection establishment process needs to be initiated.

In the RRC idle state, the core network (core network, CN) may transmit a paging message to the terminal device, that is, a paging process may be triggered by the CN. Optionally, a paging area may be configured by the CN. Mobility management of the terminal device in the RRC idle state includes cell selection or cell re-selection based on the terminal device.

The RRC inactive state is a new RRC state that is defined to reduce air interface signalling, quickly restore a wireless connection, and quickly restore a data service. The RRC inactive state is a state between the RRC connected state and the RRC idle state (that is, the RRC inactive state is different from the RRC connected state and the RRC idle state). The terminal device has been in the the RRC connected state, and then releases an RRC connection with the network device, but the network device saves the AS context of the terminal device. In addition, a connection for the terminal device that is established between the network device and the core network is not released. In other words, a user plane bearer and a control plane bearer between a RAN and the CN are still maintained, that is, there is a connection between the CN and NR.

In the RRC inactive state, the RAN may transmit a paging message to the terminal device, that is, a paging process may be triggered by the RAN. A paging area based on the RAN is managed by the RAN, and the network device can learn that a location of the terminal device is at a RAN-based paging area level. Mobility management of the terminal device in the RRC inactive state includes cell selection or cell re-selection based on the terminal device.

### Paging process

In some communications systems (for example, an NR system or an LTE system), a network device may transmit paging message to a terminal device in an RRC idle state, an RRC inactive state, or an RRC connected state. A paging process may be triggered by a core network or a base station. The paging process may be performed by a network to transmit a paging message (paging message, also referred to as a paging request) to a terminal device in the RRC idle state or the RRC inactive state, to page the terminal device, or the paging process may be performed by the network to notify a terminal device of system information update, or the paging process may be performed by the network to instruct a terminal device to receive alarm information transmitted by an earthquake and tsunami warning system (earthquake and tsunami warning system, ETWS) and/or a commercial mobile alert system (commercial mobile alert system, CMAS). In some embodiments, the network may notify the terminal device of one or more of system information update, the ETWS, or the CMAS by using a short message (short message). In some embodiments, the terminal device that receives the system information update, the ETWS, or the CMAS may be a terminal device in any RRC state, for example, a terminal device in the RRC connected state.

The paging may include a physical downlink control channel (physical downlink control channel, PDCCH) scrambled by a paging radio network temporary identifier (paging radio network temporary identifier, P-RNTI) and a physical downlink shared channel (physical downlink shared channel, PDSCH) scheduled by the PDCCH. The paging message may be transmitted in the PDSCH, or in other words, the paging message may be carried by the PDSCH. The short message may be transmitted in the PDCCH, or in other words, the short message may be carried by the PDCCH. For example, the short message may be 8-bit information in the PDCCH.

For a terminal device in the RRC idle state or the RRC inactive state, there is no other data transmission between the terminal device and the network device. Therefore, for power saving of the terminal device, the terminal device may discontinuously monitor a paging channel, that is, the terminal device may adopt a paging discontinuous reception (discontinuous reception, DRX) mechanism. In the paging DRX mechanism, the terminal device only needs to monitor the paging channel during one paging occasion (paging occasion, PO) in each paging DRX cycle (cycle). In some embodiments, a paging DRX cycle may also be referred to as a paging cycle, a DRX cycle of paging, or the like.

A paging DRX cycle may be jointly determined by a common cycle in a system broadcast and a dedicated cycle configured in higher layer signalling (for example, non-access stratum (non-access stratum, NAS) signalling). For example, the terminal device uses a smaller cycle of the two as a paging DRX cycle.

A PO indicates an instant in which a paging message may appear. The PO includes a plurality of PDCCH monitoring occasions (monitoring occasion) in a paging search space (paging search space). One PO may include X PDCCH monitoring occasions, where X is equal to a quantity of times that a synchronization signal block (synchronization signal block, SSB) broadcast by the network device in a master information block (master information block, MIB) is actually transmitted.

The PO may be determined by the terminal device based on a received paging parameter. For example, before receiving a paging message, the terminal device may first receive the paging parameter by using a system message, and then determine the PO with reference to a UE_ID of the terminal device. In some embodiments, the terminal device may alternatively determine a frame number of a paging frame (paging frame, PF) based on a received paging parameter. The PF refers to a radio frame (for example, a duration of the radio frame may be fixed at 10 milliseconds). The radio frame may include a plurality of POs or a start position of a plurality of POs. In other words, the PF indicates a frame number of a system frame that is supposed to appear in a paging message. Based on this, the terminal device may monitor, in a PO of the PF, a PDCCH scrambled by a P-RNTI, to receive paging indication information, and finally receive a paging message based on the paging indication information.

FIG. 2 shows a position of a PF within a paging DRX cycle and a position of a PO within the PF. As shown in FIG. 2, the PF is located in the paging DRX cycle, one PF may include one or more POs, and the plurality of POs may correspond to different terminal devices. In other words, from a perspective of a network device, one paging DRX cycle may include a plurality of POs. However, for a terminal device, the terminal device only needs to monitor a PO that belongs to the terminal device in a paging DRX cycle.

As described above, a terminal may calculate a PF and a PO based on a UE_ID (that is, a location at which the terminal device monitors the PO is related to the ID of the terminal device). In some implementations, a system frame corresponding to a system frame number (system frame number, SFN) that meets a formula (SFN + PF_offset) mod T = (T div N) * (UE_ID mod N) may serve as one PF. In the PF, an index (index) i_s of a PO corresponding to the terminal device in one PF may be calculated according to a formula i_s = floor (UE_ID/N) mod Ns. Herein, T represents a DRX cycle in which the terminal device receives paging; UE_ID is used to identify the terminal device; N represents a quantity of PFs included in the paging DRX cycle; Ns indicates a quantity of POs included in one PF; and PF_offset represents a time domain offset (frame offset) of a PF.

It should be noted that, for one terminal device, a network broadcasts a default DRX cycle. If a higher layer (for example, RRC) configures a dedicated DRX cycle for the terminal device, a smaller DRX cycle among the DRX cycle broadcast by the network and the DRX cycle configured by the higher layer may be selected as T. That is, T = min(T_UE, T_sib), where T_sib represents the default DRX cycle indicated in a system message, and T_UE represents the DRX cycle configured for the terminal. Certainly, for a terminal device without configuring T _UE, the default DRX cycle broadcast by the network may serve as T, that is, T = T_sib.

It should be further noted that in some embodiments, the UE_ID may be calculated by using a formula UE_ID = (5G-S-TMSI mod 1024), where 5G-S-TMSI represents a temporary mobile subscriber identity (temporary mobile subscriber identity, TMSI) allocated by a communications system to the terminal device.

The terminal device may calculate a monitored PF and an index of a PO based on the foregoing formulas. Further, the terminal device may also obtain a quantity of PDCCH monitoring occasions in the PO and a start position of a first PDCCH monitoring occasion of the PO. Exemplarily, the quantity of the PDCCH monitoring occasions in the PO may be calculated by using a formula, and the start position of the first PDCCH monitoring occasion of the PO may be obtained by using a configuration parameter transmitted by the network (for example, a configuration parameter configured by the network by using higher layer signalling). After obtaining the foregoing information or the foregoing parameter, the terminal device may blindly detect a paging message according to the determined PO.

### Paging false alarm (paging false alarm)

It may be learned from the foregoing manner in which the UE determines the PO that, determining of the PO is related to the UE_ID, the PF, and the total quantity of POs. In a case in which a system includes a relatively large quantity of terminal devices, a network device cannot allocate the terminal devices to different POs. Therefore, a plurality of terminal devices may correspond to one PO. In this case, if the network device expects to page a terminal device in the PO, other terminal devices that do not have paging messages may perform additional blind detection, which mainly includes blind detection of a PDCCH and a corresponding PDSCH. For these terminals that do not have paging messages, this wrong paging is a paging false alarm.

### Enhanced paging mechanism

Based on this, to further optimize an energy saving manner of a terminal device, an enhanced paging mechanism needs to be designed, to reduce unnecessary paging reception (that is, reduce a quantity of paging false alarms) of the terminal device. Based on this, a paging mechanism based on a paging early indication (paging early indication, PEI) or grouping of terminal devices is provided, to further save energy of the terminal device.

In a solution based on a PEI, a network device transmits a PEI to the terminal device before a PO in each paging DRX cycle arrives, to indicate the terminal device whether to receive, in the PO, a PDCCH that carries paging indication information. That is, the terminal device may determine, based on the received PEI, whether to normally monitor a paging message in the corresponding PO or not to monitor the paging message. The terminal device is awoken only when the PEI indicates that the terminal device needs to receive the PDCCH in a PO. Otherwise, if the PEI indicates that the terminal device is unnecessary to receive the PDCCH in the PO, the terminal device maintains a sleep state, to save energy.

In a solution based on grouping of terminal devices, a plurality of terminal devices in a same PO may be further grouped. Based on this, the network device may indicate a terminal device group or terminal device groups for which a paging message is intended. In this way, terminal devices in other terminal device groups are unnecessary to receive paging messages, thereby saving energy. In some embodiments, a plurality of terminal devices in a same PO may perform further grouping based on paging grouping indication information transmitted by the network device. In some embodiments, the paging grouping indication information may be carried in a PEI.

To further meet an energy saving requirement of the terminal device, an ultra-low power wake up signal (ultra-low power wake up signal, LP-WUS) is planned to be introduced in a 3GPP release 18 (release 18, R18) standard. In some embodiments, the LP-WUS may also be referred to as a super-low power wake up signal, a low power wake up signal, an energy saving signal, a WUS, or the like. Compared with the paging mechanism in which a PEI is used, the LP-WUS is more energy-efficient. A receiver with lower power consumption, instead of a main receiver, is used to receive the LP-WUS. Based on this, after receiving the LP-WUS, the terminal device starts a main receiver to monitor a paging message, thereby saving energy.

The solution in which the LP-WUS is introduced is more energy-efficient, since the LP-WUS is designed by using a waveform that is easier to be detected. In this case, a signal may be detected and demodulated by using a receiver with lower power consumption, such as an LP-WUS receiver. This detection and demodulation manner is simpler, thereby reducing power consumption. In some implementations, the LP-WUS may be an envelope signal obtained by modulating a carrier signal in a simple modulation manner, such as amplitude shift keying (amplitude shift keying, ASK) modulation or on-off keying (on-off keying, OOK) modulation, and the LP-WUS receiver may receive and demodulate the LP-WUS in an envelope detection manner.

In some implementations, demodulation of the envelope signal may be completed by driving a circuit with low power consumption by using energy provided by a radio frequency signal, and the terminal device does not require power supply. Therefore, the LP-WUS receiver may be passive. In some other implementations, power may be supplied to the LP-WUS receiver by the terminal device. No manner which power supplying manner is adopted, the LP-WUS receiver greatly reduces power consumption compared with a conventional receiver (main receiver) of the terminal device. For example, the LP-WUS receiver may implement power consumption lower than 1 milliwatt (mW), which is far lower than power consumption of the conventional receiver, that is, dozens to hundreds of mW.

FIG. 3 is a schematic diagram of a terminal device that carries an LP-WUS receiver. Referring to FIG. 3, a terminal device 300 may include a main receiver 310 and an LP-WUS receiver 320. To save power consumption of the terminal device 300, the terminal device 300 may be configured to be in a sleep state (for example, when the terminal device is in a DRX sleep period), or the main receiver 310 of the terminal device may be in the sleep state (referring to FIG. 3(a)). In this case, the terminal device 300 may receive an LP-WUS by using the LP-WUS receiver 320. After obtaining the LP-WUS through monitoring, the LP-WUS receiver 320 may awaken the main receiver 310 (referring to FIG. 2(b)). Otherwise, the main receiver 310 of the terminal device may be in the sleep state. In some implementations, the LP-WUS receiver obtaining the LP-WUS through monitoring may include that : the LP-WUS receiver obtains one LP-WUS through monitoring, or the LP-WUS receiver obtains a plurality of LP-WUSs through monitoring.

In some implementations, the LP-WUS receiver awakening the main receiver may include that: the LP-WUS receiver transmits an LP-WUS to the main receiver, where the LP-WUS is used to awaken the main receiver; or the LP-WUS receiver transmits wake up indication information to the main receiver, where the wake up indication information is used to awaken the main receiver.

It may be learned from the foregoing descriptions that, to reduce power consumption of the terminal device, the LP-WUS receiver is introduced to receive an LP-WUS. In this way, the terminal device may turn off the main receiver or cause the main receiver to be in the deep sleep state. However, receive sensitivity of the LP-WUS receiver is lower than that in the PEI-based technical solution. In other words, the receive sensitivity of the LP-WUS receiver is lower than that of the main receiver when the main receiver is in a normal transceiving state, resulting in that coverage that can be covered by the LP-WUS is also reduced. Table 1 shows performance parameters comparison between receiving a signal by using the LP-WUS receiver and receiving a signal by using the main receiver.

**Table 1**

| Solution | Range | Sensitivity | Power consumption | | Signal |
|---|---|---|---|---|---|
| Idle state in R15 | > 500 m | About -100 dBm | 1X | | No WUS |
| PEI for an idle state in R17 | > 500 m | About -100 dBm | 30-50 mW | 0.8-0.9 X | PEI in R17, based on a PDCCH or a sequence (for example, an SSS or a TRS) |
| AZP WUR | 100-200 m | -70 dBm to -90 dBm | < 100 uW | 0.001-0.01 X | New signal, based on an OOK waveform |

It should be noted that the PEI based on a PDCCH or a sequence (sequence) mentioned in Table 1 refers to that: the PEI may be carried by the PDCCH or the sequence. For example, the sequence may include a secondary synchronization signal (secondary synchronization signal, SSS), a tracking reference signal (tracking reference signal, TRS), or the like. In some embodiments, the TRS may refer to a channel state information reference signal (channel state information reference signal, CSI-RS) used for time-frequency tracking.

It may be seen that the coverage covered by the LP-WUS is relatively small, and the receive sensitivity of the LP-WUS receiver is lower than that of the main receiver. As a result, receiving performance is poor when a signal is received by using the LP-WUS receiver. In addition, if the LP-WUS receiver does not have a measurement function, turning off the main receiver may affect mobility of the terminal device to an extent. However, although receiving performance is relatively good when the main receiver is turned on to receive a signal, power consumption is relatively high, which is not conducive to energy saving of the terminal device. Therefore, in a case in which the terminal device includes a plurality of receivers (for example, an LP-WUS receiver and a main receiver), different receiving states may be supported. In different receiving states, receiving performance of the terminal device and power consumption generated by the terminal device may be different. Therefore, how the terminal device uses the receiving states is a problem to be resolved.

To resolve the foregoing problem, embodiments of this application provide a method for wireless communication, a terminal device, and a network device, so that the terminal device can know a target receiving state, and use different target receiving states in different scenarios, thereby being conductive to balancing receiving performance and power consumption of the terminal device.

The terminal device mentioned in embodiments of this application may include different receivers (the following uses an example in which the terminal device includes a first receiver and a second receiver for description). Power consumption of the first receiver and the second receiver included in the terminal device is different. For example, the power consumption of the second receiver is less than that of the first receiver.

In some embodiments, the first receiver may be a main receiver (main radio). The main receiver has relatively high power consumption and a relatively strong capability. For example, receive sensitivity of the main receiver may be higher. Modulation manners and modulation waveforms that can be supported by the main receiver may have a larger quantity and may be more complex, a transmission rate of the main receiver may be higher, a bandwidth range supported by the main receiver may be larger, a bit rate supported by the main receiver may be higher, and the like.

In some embodiments, the second receiver may be an LP-WUS receiver. The LP-WUS receiver has relatively low power consumption and a relatively weak capability. For example, receive sensitivity of the LP-WUS receiver may be lower. Modulation manners and modulation waveforms that can be supported by the LP-WUS receiver may be less and simpler, a transmission rate of the LP-WUS receiver may be lower, a bandwidth range supported by the LP-WUS receiver may be smaller, a bit rate supported by the LP-WUS receiver may be lower, and the like. In some embodiments, the LP-WUS receiver may also be referred to as an ultra-low power wake up receiver (ultra-low power wake up receiver, LP-WUR), a super-low power receiver, a wake up receiver (wake up receiver, WUR), or the like. This is not limited in embodiments of this application.

In some embodiments, if the power consumption of the second receiver is less than that of the first receiver, it may be understood as that a capability of the second receiver is weaker than that of the first receiver.

For ease of distinction, the following describes performance differences between the first receiver and the second receiver from aspects such as power consumption, receive sensitivity, a modulation manner, a modulation waveform, a transmission rate, a supported bandwidth range, and a supported bit rate.

In terms of power consumption, power consumption of the first receiver may be higher than that of the second receiver. For example, the power consumption of the first receiver may be approximately 30-50 mW, and the power consumption of the second receiver may be less than 100 microwatts (uW).

In terms of receive sensitivity, receive sensitivity of the first receiver may be higher than that of the second receiver. For example, the receive sensitivity of the first receiver may be approximately -100 dBm (dBm), and the receive sensitivity of the second receiver may be approximately -70 dBm to -90 dBm.

In terms of a supported modulation manner, complexity of a modulation manner supported by the first receiver may be higher than that of the second receiver. For example, the modulation manner supported by the first receiver may include one or more of the following modulation manners: quadrature phase shift keying (quadrature phase shift keying, QPSK), quadrature amplitude modulation (quadrature amplitude modulation, QAM), orthogonal frequency division multiplexing (orthogonal frequency division multiplexing, OFDM), or the like. The modulation manner that may be supported by the second receiver may include one or more of the following modulation manners: ASK, OOK, phase shift keying (phase shift keying, PSK), frequency shift keying (frequency shift keying, FSK), or the like. Certainly, in some embodiments, the first receiver may alternatively support at least one of the following modulation manners: ASK, OOK, PSK, or FSK. This is not specifically limited in embodiments of this application.

In terms of a supported modulation waveform, complexity of a modulation waveform supported by the first receiver may be higher than that of the second receiver. For example, the modulation waveform supported by the first receiver may include one or more of the following modulation waveforms: a waveform corresponding to a QPSK signal, a waveform corresponding to a QAM signal, or a waveform corresponding to an OFDM signal. The modulation waveform that may be supported by the second receiver may include one or more of the following modulation waveforms: a waveform corresponding to an ASK signal, a waveform corresponding to an OOK signal, a waveform corresponding to a PSK signal, a waveform corresponding to an FSK signal, or the like. Certainly, in some embodiments, the first receiver may also support a waveform corresponding to one or more of the following signals: ASK, OOK, PSK, or FSK. This is not specifically limited in embodiments of this application.

In terms of a supported transmission rate, a transmission rate supported by the first receiver may be higher than that of the second receiver. For example, the transmission rate supported by the second receiver is less than a first rate threshold, and a value of the first rate threshold may range from 1 Kbps to 1 Mbps. The value of the first rate threshold may be 1 Kbps, 128 Kbps, 515 Kbps, 1 Mbps, or the like. The transmission rate that can be supported by the first receiver may be greater than the first rate threshold. For example, the transmission rate supported by the first receiver may be greater than 10 Kbps, 100 Kbps, 1000 Kbps, 1 Gbps, or the like.

In terms of a supported bandwidth range, a bandwidth range that can be supported by the first receiver may be greater than that of the second receiver, or in other words, a bandwidth that can be supported by the first receiver may be wider than that of the second receiver. For example, the bandwidth supported by the second receiver may be less than or equal to a first bandwidth threshold, and a value of the first bandwidth threshold may range from 1 KB to 1 MB. The value of the first bandwidth threshold may be 1 KB, 128 KB, 515 KB, 1 MB, or the like. The bandwidth supported by the first receiver may be greater than the first bandwidth threshold. For example, the bandwidth supported by the first receiver may be greater than 10 KB, 100 KB, 1000 KB, 1 GB, or the like.

In terms of a supported bit rate, a bit rate supported by the first receiver may be higher than that of the second receiver. For example, the bit rate supported by the second receiver is less than or equal to a first bit rate threshold, and the first bit rate threshold may range from 0.3 to 0.6. For example, the first bit rate threshold may be 0.3, 0.5, or 0.6. The bit rate supported by the first receiver may be greater than the first bit rate threshold. For example, the bit rate supported by the first receiver may be greater than 0.7, 0.8, or 0.9, or near 1.

Based on performance differences of different receivers supported by a terminal device, the terminal device may support different receiving states. The following uses an example in which the terminal device supports a first receiving state and a second receiving state for description.

In some embodiments, in the first receiving state, a first receiver is turned off or in a deep sleep state (or referred to as a sleep state). In other words, when the terminal device is in the first receiving state, it may be understood as that the first receiver does not work and a second receiver works. That is, when being in the first receiving state, the terminal device receives a signal by using the second receiver instead of the first receiver. When being in the first receiving state, the terminal device has relatively low power consumption, thereby being conducive to energy saving.

In some embodiments, in the second receiving state, the first receiver is turned on and in a normal transceiving state. In other words, when the terminal device is in the second receiving state, it may be understood as that the first receiver works. That is, when being in the second receiving state, the terminal device may receive a signal by using the first receiver. When being in the second receiving state, the terminal device has relatively strong receiving performance and relatively large power consumption.

In some embodiments, when the terminal device is in the second receiving state, the second receiver may be turned on. For example, when being in the second receiving state, the terminal device may turn on the second receiver to detect or measure a first signal described in the following, thereby determining whether to switch from the second receiving state to the first receiving state.

In some embodiments, when the terminal device is in the second receiving state, the second receiver may alternatively be turned off, which is not limited in embodiments of this application. For example, when the second receiving state is switched to the first receiving state, the second receiver is unnecessary to detect or measure the first signal. In this case, the second receiver may be turned off in the second receiving state, to further save energy.

In embodiments of this application, in a case in which the terminal device supports the first receiving state and the second receiving state, the terminal device can determine the target receiving state, to receive a signal according to the determined target receiving state. Based on this, according to the technical solutions in embodiments of this application, a signal can be received by using different target receiving states in different scenarios, thereby being conductive to balancing receiving performance and power consumption of the terminal device.

In some embodiments, the target receiving state may be the first receiving state. In some cases, after determining that the target receiving state is the first receiving state, the terminal device may receive a signal based on the determined first receiving state. In this case, the terminal device may turn off the first receiver or cause the first receiver to be in a deep sleep state, and receive a signal by using the second receiver.

In some embodiments, the target receiving state may be the second receiving state. In some cases, after determining that the target receiving state is the second receiving state, the terminal device may receive a signal based on the determined second receiving state. In this case, the terminal device may turn on the first receiver and cause the first receiver to be in a normal transceiving state. Optionally, when determining that the target receiving state is the second receiving state, the terminal device may choose to turn off the second receiver or turn on the second receiver.

In some embodiments, the target receiving state of the terminal device may be independently determined by the terminal device. After independently determining the target receiving state, the terminal device may receive a signal according to the determined target receiving state.

In some embodiments, the target receiving state of the terminal device may be configured by a network device. After the network device configures the target receiving state for the terminal device, the terminal device may receive a signal based on the target receiving state configured by the network device.

In some embodiments, the technical solutions in embodiments of this application may be applicable to a terminal device in an RRC idle state or an RRC inactive state. For example, when the target receiving state is the first receiving state, the second receiver may be used to receive an LP-WUS, to awaken the first receiver to monitor a paging message after receiving the LP-WUS.

In some embodiments, the technical solutions in embodiments of this application may be applicable to a terminal device in an RRC connected state. For example, in the RRC connected state, in a case in which there is no data transmission between the terminal device and the network device, the first receiver may be turned off or in a deep sleep state and the second receiver may be turned on. In this way, when data is to be transmitted, the network device may transmit an LP-WUS to the second receiver, so that the second receiver awakens the first receiver to transmit data or the like.

That is, in embodiments of this application, the terminal device may be in the RRC idle state, the RRC inactive state, or the RRC connected state. This is not limited in embodiments of this application.

With reference to Embodiment 1 and Embodiment 2, the following describes the method embodiments of this application in detail. Embodiment 1 is intended to describe a case in which a terminal device independently determines a target receiving state, and Embodiment 2 is intended to describe a case in which a network device configures a target receiving state for a terminal device. It should be noted that some content in Embodiment 1 corresponds to some content in Embodiment 2, for example, specific content of a first condition and a configuration parameter configured by the network device. Therefore, for a part that is not described in detail, reference may be mutually made for understanding.

### Embodiment 1

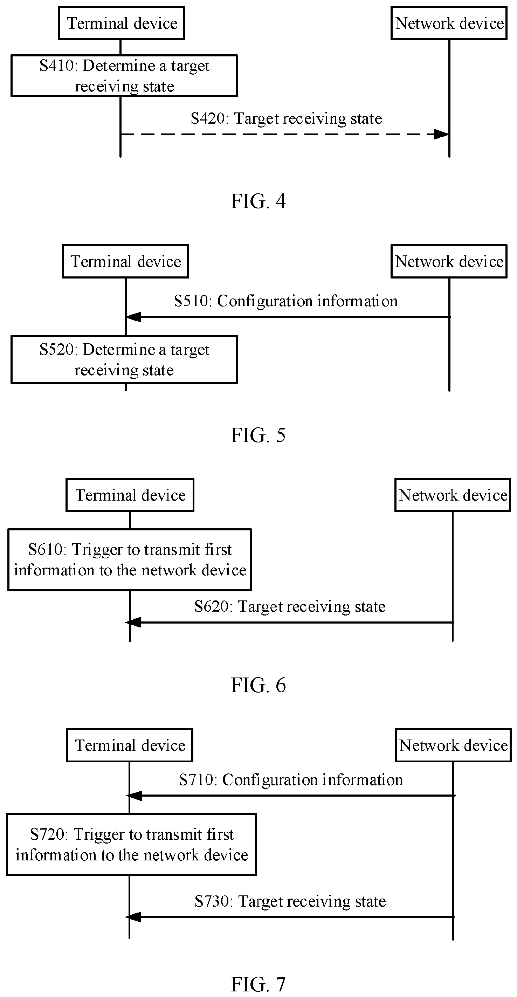

FIG. 4 is a schematic flowchart of a method for wireless communication according to an embodiment of this application. The method shown in FIG. 4 is described from a perspective of interaction between a terminal device and a network device. The terminal device may be, for example, the terminal device 120 shown in FIG. 1. The terminal device includes the first receiver and the second receiver that are mentioned above. The network device may be, for example, the network device 110 shown in FIG. 1. The method shown in FIG. 4 may include step S410. The following describes this step.

In step S410, the terminal device determines a target receiving state.

In some embodiments, the terminal device may independently determine the target receiving state.

In some embodiments, the target receiving state determined by the terminal device may be a first receiving state. For example, the terminal device is currently in a second receiving state. If the terminal device determines to switch from the second receiving state to the first receiving state, the target receiving state determined by the terminal device is the first receiving state.

In some embodiments, the target receiving state determined by the terminal device may be the second receiving state. For example, the terminal device is currently in the first receiving state. If the terminal device determines to switch from the first receiving state to the second receiving state, the target receiving state determined by the terminal device is the second receiving state.

In some embodiments, the target receiving state may be determined based on a first condition. That is, the first condition may be used by the terminal device to determine or re-determine the target receiving state, or in other words, the first condition may be used by the terminal device to switch a receiving state. For example, when the terminal device is currently in the first receiving state, if the terminal device meets the first condition, the terminal device may determine or re-determine the target receiving state, to determine whether to switch to the second receiving state. Alternatively, when the terminal device is currently in the second receiving state, if the terminal device meets the first condition, the terminal device may determine or re-determine the target receiving state, to determine whether to switch to the first receiving state.

In some embodiments, the first condition may include a condition for switching from the first receiving state to the second receiving state. In some embodiments, the first condition may include a condition for switching from the second receiving state to the first receiving state. In some embodiments, the first condition may include both a condition for switching from the first receiving state to the second receiving state and a condition for switching from the second receiving state to the first receiving state.

In some embodiments, the first condition may be determined based on one or more of the following: a detection or measurement result of a first signal; a threshold of a quantity of times associated with detection or measurement of a first signal; a threshold of duration associated with detection or measurement of a first signal; a first counter; a first timer; or the like.

In some embodiments, the detection or measurement result of the first signal may be used by the terminal device to determine signal quality of the first signal received by the terminal device. For example, when the terminal device cannot detect the first signal or the signal quality of the first signal measured by the terminal device is less than a threshold, it may be understood as that the signal quality of the first signal received by the terminal device is relatively poor. Alternatively, when the terminal device can detect the first signal or measured signal quality of the first signal is higher than a threshold, it may be understood as that the signal quality of the first signal received by the terminal device is relatively good.

The first signal is not specifically limited in embodiments of this application, provided that the first signal is a signal (for example, a downlink signal) transmitted by the network device to the terminal device. For example, the first signal may be one or more of the following signals: a beacon (beacon) signal, a downlink reference signal, or a measurement signal. The downlink reference signal may include, for example, a CSI-RS, a cell reference signal (cell reference signal, CRS), a positioning reference signal (positioning reference signal, PRS), or the like. This is not limited in this application.

In some embodiments, the first signal may be a periodically transmitted signal. Optionally, embodiments of this application do not limit a transmission period of the first signal. For example, the transmission period may be a period at a subframe level, a period at a slot level, a period at a symbol level, or a period at a millisecond level.

In some embodiments, the transmission period of the first signal may be configured by the network device. However, embodiments of this application are not limited thereto. For example, the transmission period of the first signal may be pre-defined in a protocol, pre-configured, or the like.

In some embodiments, the first signal is detected or measured by the second receiver. For example, no matter the terminal device is in the first receiving state or the second receiving state, the first signal may be detected or measured by the second receiver (for example, an LP-WUS receiver).

In some embodiments, the detection or measurement result of the first signal may be one detection or measurement result, or may be a plurality of detection or measurement results. In some embodiments, the detection or measurement result of the first signal may be a detection or measurement result for an instant, or may be a detection or measurement result for a time period. Preferably, in this embodiment of this application, the detection or measurement result of the first signal may be a plurality of detection or measurement results and/or a detection or measurement result for a time period, thereby avoiding ping-pong switching between receiving states of the terminal device.

In some embodiments, the threshold of the quantity of times associated with detection or measurement of the first signal may refer to a threshold of a quantity of times associated with consecutive detection or consecutive measurement of the first signal. In some embodiments, the threshold of the quantity of times associated with detection or measurement of the first signal may refer to a threshold of a quantity of times associated with detection or measurement of the first signal within a period of time.

In some embodiments, the threshold of the quantity of times associated with detection or measurement of the first signal may include one or more of the following thresholds of a quantity of times: a first parameter, used to indicate a threshold of a quantity of times that a first signal is consecutively not detected or measured signal quality of a first signal is consecutively less than or equal to a threshold; a third parameter, used to indicate a threshold of a quantity of times that a first signal is consecutively detected or measured signal quality of a first signal is consecutively greater than a threshold; a fifth parameter, used to indicate a threshold of a quantity of times that a first signal is not detected within a period of time or measured signal quality of a first signal is less than or equal to a threshold within a period of time; or a sixth parameter, used to indicate a threshold of a quantity of times that a first signal is detected within a period of time or measured signal quality of a first signal is greater than a threshold within a period of time.

In some embodiments, the threshold of the duration associated with detection or measurement of the first signal may refer to a threshold of duration associated with consecutive detection or consecutive measurement of the first signal. In some embodiments, the threshold of the duration associated with detection or measurement of the first signal may refer to a threshold of duration associated with detection or measurement of the first signal within a period of time.

In some embodiments, the threshold of the duration associated with detection or measurement of the first signal may include one or more of the following thresholds of duration: a second parameter, used to indicate a threshold of duration in which a first signal is consecutively not detected or measured signal quality of a first signal is consecutively less than or equal to a threshold; or a fourth parameter, used to indicate a threshold of duration in which a first signal is consecutively detected or measured signal quality of a first signal is consecutively greater than a threshold.

In some embodiments, the first counter may be used to record a quantity of times associated with detection or measurement of the first signal. For example, the first counter may be used to record a quantity of times that the first signal is consecutively not detected or is consecutively detected, or the first counter may be used to record a quantity of times that measured signal quality of the first signal is consecutively less than, equal to, or greater than a threshold, or the first counter may be used to record a quantity of times that the first signal is not detected or detected within a period of time, or the first counter may be used to record a quantity of times that measured signal quality of the first signal is less than, equal to, or greater than a threshold within a period of time.

In some embodiments, the first timer may be used to record the duration associated with detection or measurement of the first signal. For example, the first timer may be used to record duration in which the first signal is consecutively not detected or is consecutively detected; or the first timer may be used to record duration in which measured signal quality of the first signal is consecutively less than, equal to, or greater than a threshold; or the first timer may be used to record duration of a period of time in which the first signal is not detected or detected; or the first timer may be used to record duration in a period of time in which measured signal quality of the first signal is less than, equal to, or greater than a threshold.

As described above, the first condition may include the condition for switching from the first receiving state to the second receiving state. In this case, the first condition may include one or more of the following: a quantity of times that the first signal is consecutively not detected reaches the threshold of the quantity of times indicated by the first parameter; a quantity of times that measured signal quality of the first signal is consecutively less than or equal to a first threshold reaches the threshold of the quantity of times indicated by the first parameter; duration in which the first signal is consecutively not detected reaches the threshold of the duration indicated by the second parameter; duration in which measured signal quality of the first signal is consecutively less than or equal to a second threshold reaches the threshold of the duration indicated by the second parameter; a quantity of times that the first signal is not detected within a period of time reaches the threshold of the quantity of times indicated by the fifth parameter; or a quantity of times that measured signal quality of the first signal is less than or equal to a third threshold within a period of time reaches the threshold of the quantity of times indicated by the fifth parameter.

As described above, the first condition may include the condition for switching from the second receiving state to the first receiving state. In this case, the first condition may include one or more of the following: a quantity of times that the first signal is consecutively detected reaches the threshold of the quantity of times indicated by the third parameter; a quantity of times that measured signal quality of the first signal is consecutively greater than a fourth threshold reaches the threshold of the quantity of times indicated by the third parameter; duration in which the first signal is consecutively detected reaches the threshold of the duration indicated by the fourth parameter; duration in which measured signal quality of the first signal is consecutively greater than a fifth threshold reaches the threshold of the duration indicated by the fourth parameter; a quantity of times that the first signal is detected within a period of time reaches the threshold of the quantity of times indicated by the sixth parameter; or a quantity of times that measured signal quality of the first signal is greater than a sixth threshold within a period of time reaches the threshold of the quantity of times indicated by the sixth parameter.

In some embodiments, the foregoing thresholds (for example, the first threshold and the second threshold) may be understood as a channel quality threshold (for example, a first channel quality threshold and a second signal quality threshold), which is not limited in embodiments of this application.

In some embodiments, the foregoing parameters (the first parameter, the second parameter, and the like) and/or the foregoing thresholds may be configured by the network device (for details, refer to the descriptions of the embodiment shown in FIG. 5 in the following). However, embodiments of this application are not limited thereto. These parameters and/or thresholds may alternatively be pre-defined in a protocol, pre-configured, or the like.

It should be noted that the foregoing thresholds indicated by different parameters may be the same or different. This is not limited in embodiments of this application. For example, the threshold of the quantity of times indicated by the first parameter may be the same as or different from the threshold of the quantity of times indicated by the fifth parameter. It should be further noted that thresholds indicated by a same parameter in different cases may be the same or different, which is not limited in embodiments of this application. The first parameter is used as an example. For a case in which the first parameter indicates the threshold of the quantity of times that the first signal is not consecutively detected and a case in which the first parameter indicates the threshold of the quantity of times that measured signal quality of the first signal is consecutively less than or equal to the first threshold, the thresholds of the quantity of times indicated by the first parameter may be the same (for example, the thresholds of the quantity of times indicated by the first parameter in the two cases may both be N1), or the thresholds of the quantity of times indicated by the first parameter may be different (for example, the thresholds of the quantity of times indicated by the first parameter in the two cases are respectively N1 and N2). Values of other parameters are similar, and may be the same or different. For brevity, details are not described herein again.

Still referring to FIG. 4, in some embodiments, the method shown in FIG. 4 may further include step S420. In step S420, the terminal device transmits the target receiving state to the network device.

The terminal device may independently determine the target receiving state, and notify the network device after determining the target receiving state, to ensure information synchronization between the terminal device and the network device.

In some embodiments, when the terminal device is in an RRC connected state, the terminal device may transmit the target receiving state to the network device.

FIG. 5 is a schematic flowchart of a method for wireless communication according to another embodiment of this application. As shown in FIG. 5, in some embodiments, the method may include step S510 and step S520.

In step S510, a network device transmits configuration information to a terminal device.

The configuration information may be used to instruct the terminal device to determine a configuration parameter associated with a target receiving state.

In some embodiments, the configuration parameter may include the foregoing threshold of the quantity of times associated with detection or measurement of the first signal, the foregoing threshold of duration associated with detection or measurement of the first signal, a value of a threshold corresponding to signal quality of a first signal, a period of time associated with a first timer, a configuration parameter of a first signal, or the like.

In some embodiments, the configuration parameter may include one or more of the following: a first parameter, used to indicate a threshold of a quantity of times that a first signal is consecutively not detected or measured signal quality of a first signal is consecutively less than or equal to a threshold; a second parameter, used to indicate a threshold of duration in which a first signal is consecutively not detected or measured signal quality of a first signal is consecutively less than or equal to a threshold; a third parameter, used to indicate a threshold of a quantity of times that a first signal is consecutively detected or measured signal quality of a first signal is consecutively greater than a threshold; a fourth parameter, used to indicate a threshold of duration in which a first signal is consecutively detected or measured signal quality of a first signal is consecutively greater than a threshold; a fifth parameter, used to indicate a threshold of a quantity of times that a first signal is not detected within a period of time or measured signal quality of a first signal is less than or equal to a threshold within a period of time; a sixth parameter, used to indicate a threshold of a quantity of times that a first signal is detected within a period of time or measured signal quality of a first signal is greater than a threshold within a period of time; a value of a threshold corresponding to signal quality of a first signal; a value of the foregoing period of time; or the configuration parameter of the first signal.

In some embodiments, the threshold corresponding to the signal quality of the first signal may be, for example, the first threshold, the second threshold, or the third threshold mentioned above. This is not limited in embodiments of this application.

In some embodiments, the configuration parameter of the first signal may include, for example, the transmission period of the first signal mentioned above. However, embodiments of this application are not limited thereto. The configuration parameter of the first signal may be any configuration parameter related to configuration of the first signal. For example, the configuration parameter of the first signal may further include a resource for transmitting the first signal, such as a time-frequency resource and a location.

In some embodiments, the foregoing configuration information may be configured by the network device for the terminal device in one or more of the following manners: broadcasting, or dedicated signalling of the terminal device. In some embodiments, the dedicated signalling of the terminal device may be, for example, RRC signalling, medium access control control element (medium access control control element, MAC CE) signalling, downlink control information (downlink control information, DCI), or the like.

In step S520, the terminal device determines the target receiving state.

For detailed content of step S520, one may refer to the foregoing related descriptions of step S410. Details are not described herein again.

### Embodiment 2

FIG. 6 is a schematic flowchart of a method for wireless communication according to still another embodiment of this application. The method shown in FIG. 6 is described from a perspective of interaction between a terminal device and a network device. The terminal device may be, for example, the terminal device 120 shown in FIG. 1. The terminal device includes the first receiver and the second receiver that are mentioned above. The network device may be, for example, the network device 110 shown in FIG. 1. The method shown in FIG. 6 may include step S610 and step S620. The following describes these steps.

In step S610, the terminal device triggers to transmit first information to the network device.

The first information may be used by the network device to configure a target receiving state for the terminal device. In other words, the first information may be used by the network device to determine whether to enable the terminal device to switch a receiving state.

In some embodiments, the first information may be used to indicate a detection or measurement result of a first signal, and/or the first information may be used to indicate that the terminal device meets a first condition.

In some embodiments, the first information may include the detection or measurement result of the first signal, so that the network device determines the target receiving state of the terminal device based on the detection or measurement result.

In some embodiments, the first information may be indication information, which is used to indicate that the terminal device meets the first condition. In an implementation, the first information may indicate that the terminal device meets a condition for triggering reporting of the first information. For example, the first information may include the first condition. In another implementation, the first information may indicate whether the terminal device meets the first condition. For example, the first information may be indication information including a few bits (for example, one bit or two bits), which is used to indicate whether the terminal device meets the first condition.

In some embodiments, in a case in which the first information is indication information including a few bits, which is used to indicate whether the terminal device meets the first condition, the first condition may include a first sub-condition and a second sub-condition. The first sub-condition may include a condition for the terminal device to switch from a first receiving state to a second receiving state, and the second sub-condition may include a condition for the terminal device to switch from the second receiving state to the first receiving state. In this case, the first sub-condition and the second sub-condition may each correspond to 1-bit indication information, to indicate whether the terminal device meets the first sub-condition and/or whether the terminal device meets the second sub-condition.

In some embodiments, the first information may be transmitted by the terminal device to the network device in a manner of measurement reporting. In some embodiments, the first information may be transmitted by the terminal device to the network device in a manner of reporting auxiliary information of the terminal device. However, embodiments of this application are not limited thereto. The first information may be transmitted by the terminal device in any manner supported by the terminal device. For example, the terminal device may transmit the first information to the network device by using RRC signalling, a MAC CE, or the like.

In some embodiments, the transmission of the first information is triggered in response to the first condition. For detailed descriptions of the first condition, one may refer to the descriptions of the first condition in Embodiment 1. Details are not described herein again.

It should be noted that, in a case in which the first condition includes the first sub-condition, the first condition may exemplarily include one or more of the following conditions: a quantity of times that the first signal is consecutively not detected reaches a threshold of a quantity of times indicated by a first parameter; a quantity of times that measured signal quality of the first signal is consecutively less than or equal to a first threshold reaches a threshold of a quantity of times indicated by a first parameter; duration in which the first signal is consecutively not detected reaches a threshold of duration indicated by a second parameter; duration in which measured signal quality of the first signal is consecutively less than or equal to a second threshold reaches a threshold of duration indicated by a second parameter; a quantity of times that the first signal is not detected within a period of time reaches a threshold of a quantity of times indicated by a fifth parameter; or a quantity of times that measured signal quality of the first signal is less than or equal to a third threshold within a period of time reaches a threshold of a quantity of times indicated by a fifth parameter.

In a case in which the first condition includes the second sub-condition, the second sub-condition may exemplarily include one or more of the following conditions: a quantity of times that the first signal is consecutively detected reaches a threshold of a quantity of times indicated by a third parameter; a quantity of times that measured signal quality of the first signal is consecutively greater than a fourth threshold reaches a threshold of a quantity of times indicated by a third parameter; duration in which the first signal is consecutively detected reaches a threshold of duration indicated by a fourth parameter; duration in which measured signal quality of the first signal is consecutively greater than a fifth threshold reaches a threshold of duration indicated by a fourth parameter; a quantity of times that the first signal is detected within a period of time reaches a threshold of a quantity of times indicated by a sixth parameter; or a quantity of times that measured signal quality of the first signal is greater than a sixth threshold within a period of time reaches a threshold of a quantity of times indicated by a sixth parameter.

In some embodiments, the first signal may include one or more of the following: a beacon signal, a downlink reference signal, or a measurement signal. In some embodiments, the first signal is detected or measured by a second receiver. For descriptions related to the first signal and detection or measurement of the first signal, one may refer to related descriptions in Embodiment 1. For brevity, details are not described herein again.

In some embodiments, the terminal device triggering reporting of the first information may include that: the terminal device triggers the reporting when meeting the first condition.

In some embodiments, after triggering the reporting of the first information, the terminal device may immediately report the first information to the network device. In some embodiments, after triggering the reporting of the first information, the terminal device does not immediately report the first information to the network device. For example, the terminal device may report the first information to the network device after a period of time since the triggering of the reporting. Embodiments of this application do not limit a reason why the terminal device does not immediately report the first information to the network device. For example, the terminal device currently has no reporting resource and needs to wait for a reporting resource before reporting the first information to the network device. Alternatively, a protocol specifies a preset time period or a network pre-configures a preset time period. After triggering the reporting of the first information, the terminal device may wait for the preset time period before reporting the first information to the network device.

In step S620, the network device transmits the configured target receiving state to the terminal device.

In some embodiments, the network device may determine, based on the first information transmitted by the terminal device, to enable the terminal device to switch a receiving state. In this case, the network device may transmit, to the terminal device, the target receiving state configured by the network device for the terminal device, so that the terminal device receives a signal according to the target receiving state.

In some embodiments, the target receiving state configured by the network device for the terminal device may be the first receiving state. For example, the terminal device is currently in the second receiving state. If the network device determines that the terminal device needs to switch from the second receiving state to the first receiving state, the target receiving state configured by the network device for the terminal device is the first receiving state.

In some embodiments, the target receiving state configured by the network device for the terminal device may be the second receiving state. For example, the terminal device is currently in the first receiving state. If the network device determines that the terminal device needs to switch from the first receiving state to the second receiving state, the target receiving state configured by the network device for the terminal device is the second receiving state.

It should be understood that the solution in Embodiment 2 may also be understood as a process in which the terminal device determines the target receiving state. The target receiving state is determined by the terminal device based on the target receiving state configured by the network device.

FIG. 7 is a schematic flowchart of a method for wireless communication according to yet another embodiment of this application. As shown in FIG. 7, in some embodiments, the method may include step S710 to step S730.

In step S710, a network device transmits configuration information to a terminal device.

The configuration information may be used to instruct the terminal device to determine a configuration parameter associated with triggering of reporting of first information.

In some embodiments, the configuration parameter may include the foregoing threshold of the quantity of times associated with detection or measurement of the first signal, the foregoing threshold of duration associated with detection or measurement of the first signal, a value of a threshold corresponding to signal quality of a first signal, a period of time associated with a first timer, a configuration parameter of a first signal, or the like.

In some embodiments, the configuration parameter may include one or more of the following: a first parameter, used to indicate a threshold of a quantity of times that a first signal is consecutively not detected or measured signal quality of a first signal is consecutively less than or equal to a threshold; a second parameter, used to indicate a threshold of duration in which a first signal is consecutively not detected or measured signal quality of a first signal is consecutively less than or equal to a threshold; a third parameter, used to indicate a threshold of a quantity of times that a first signal is consecutively detected or measured signal quality of a first signal is consecutively greater than a threshold; a fourth parameter, used to indicate a threshold of duration in which a first signal is consecutively detected or measured signal quality of a first signal is consecutively greater than a threshold; a fifth parameter, used to indicate a threshold of a quantity of times that a first signal is not detected within a period of time or measured signal quality of a first signal is less than or equal to a threshold within a period of time; a sixth parameter, used to indicate a threshold of a quantity of times that a first signal is detected within a period of time or measured signal quality of a first signal is greater than a threshold within a period of time; a value of a threshold corresponding to signal quality of a first signal; a value of the foregoing period of time; or the configuration parameter of the first signal.

In some embodiments, the threshold corresponding to the signal quality of the first signal may be, for example, the first threshold, the second threshold, or the third threshold mentioned above. This is not limited in embodiments of this application.

In some embodiments, the configuration parameter of the first signal may include, for example, the transmission period of the first signal mentioned above. However, embodiments of this application are not limited thereto. The configuration parameter of the first signal may be any configuration parameter related to configuration of the first signal. For example, the configuration parameter of the first signal may further include a resource for transmitting the first signal, such as a time-frequency resource and a location.

In some embodiments, the foregoing configuration information may be configured by the network device for the terminal device in one or more of the following manners: broadcasting, or dedicated signalling of the terminal device. In some embodiments, the dedicated signalling of the terminal device may be, for example, RRC signalling, MAC CE signalling, DCI, or the like.

In step S720, the terminal device triggers to transmit first information to the network device.

In step S730, the network device transmits a configured target receiving state to the terminal device.

For detailed descriptions of step S720 and step S730, one may refer to the related descriptions of step S610 and step S620 in the foregoing. For brevity, details are not described herein again.

For ease of understanding, the following provides several specific embodiments. It should be noted that the following embodiments are merely examples, and are not used to limit the technical solutions of this application.

### Example 1: Receiving state switching mechanism of a terminal device based on a counter

In Example 1, an LP-WUS receiver of a terminal device may perform counting based on a detection and/or measurement status of a first signal, so that the terminal device determines, based on a counting status of the counter, whether to switch a receiving state.

It should be noted that the solution of Example 1 may only be applicable to switching from a first receiving state to a second receiving state (that is, a case 1 in the following), or the solution of Example 1 may only be applicable to switching from the second receiving state to the first receiving state (that is, a case 2 in the following), or the solution of Example 1 may be applicable to switching between the first receiving state and the second receiving state (that is, may be applicable to both the case 1 and the case 2 in the following).

It should be further noted that the solution of Example 1 may be applicable to a terminal device in an RRC idle state, an RRC inactive state, or an RRC connected state.

The following describes a specific solution of Example 1.

Case 1: The terminal device is currently in the first receiving state (for example, the LP-WUS receiver of the terminal device is turned on and a main receiver is turned off). In this case, the terminal device determines to switch from the first receiving state to the second receiving state (for example, the main receiver of the terminal device is turned on) when one or more of the following conditions are met. The conditions may include: the first signal fails to be detected for N1 consecutive times; and/or, signal quality of the first signal measured for N1 consecutive times is less than a first threshold (for example, a first channel quality threshold).

Case 2: The terminal device is currently in the second receiving state. In this case, the terminal device determines to switch from the second receiving state to the first receiving state when one or more of the following conditions are met. The conditions may include: the first signal is detected for N2 consecutive times; and/or, signal quality of the first signal measured for N2 consecutive times is greater than a second threshold (for example, a second channel quality threshold).

In some embodiments, the first signal includes one or more of the following: a beacon signal, a downlink reference signal, or a measurement signal.

In some embodiments, the first signal is a periodically transmitted signal.

In some embodiments, a transmission period of the first signal may be configured by a network device.

In some embodiments, N1 and/or the first threshold may be configured by the network device. For example, the network device may configure N1 and/or the first threshold by using broadcasting, dedicated signalling (such as RRC signalling or MAC CE signalling) of the terminal device, or the like.

In some embodiments, N2 and/or the second threshold may be configured by the network device. For example, the network device may configure N2 and/or the second threshold by using broadcasting, dedicated signalling (such as RRC signalling or MAC CE signalling) of the terminal device, or the like.

In some embodiments, for the terminal device in the RRC connected state, when switching a receiving state (for example, switching from the first receiving state to the second receiving state or switching from the second receiving state to the first receiving state), the terminal device may notify the network device of a determined target receiving state (for example, when it is switched from the first receiving state to the second receiving state, the target receiving state is the second receiving state; or, when it is switched from the second receiving state to the first receiving state, the target receiving state is the first receiving state). For example, the terminal device may notify the network device by using RRC signalling, MAC CE signalling, or the like.

In some embodiments, for the terminal device in the RRC connected state, when meeting a condition for switching a receiving state, the terminal device may alternatively trigger measurement reporting or UE auxiliary information reporting, to notify the network device that the terminal device meets the condition for switching the receiving state. The network device determines whether to enable the terminal device to switch the receiving state. Optionally, the terminal device may perform measurement reporting or UE auxiliary information reporting to the network device by using RRC signalling, MAC CE signalling, or the like.

### Example 2: Receiving state switching mechanism of a terminal device based on a timer

In Example 2, an LP-WUS receiver of a terminal device may detect and/or measure a first signal for a period of time, so that the terminal device determines, based on a status of detection and/or measurement performed on the first signal in the period of time, whether to switch a receiving state.

It should be noted that the solution of Example 2 may only be applicable to switching from a first receiving state to a second receiving state (that is, a case 3 in the following), or the solution of Example 2 may only be applicable to switching from the second receiving state to the first receiving state (that is, a case 4 in the following), or the solution of Example 2 may be applicable to switching between the first receiving state and the second receiving state (that is, may be applicable to both the case 3 and the case 4 in the following).

It should be further noted that the solution of Example 2 may be applicable to a terminal device in an RRC idle state, an RRC inactive state, or an RRC connected state.

The following describes a specific solution of Example 2.

Case 3: The terminal device is currently in the first receiving state (for example, the LP-WUS receiver of the terminal device is turned on and a main receiver is turned off). In this case, the terminal device determines to switch from the first receiving state to the second receiving state (for example, the main receiver of the terminal device is turned on) when one or more of the following conditions are met. The conditions may include: the first signal fails to be detected within duration T1; and/or, signal quality of the first signal measured within the duration T1 is less than a third threshold (for example, a third channel quality threshold).

Case 4: The terminal device is currently in the second receiving state. In this case, the terminal device determines to switch from the second receiving state to the first receiving state when one or more of the following conditions are met. The conditions may include: the first signal is detected within duration T2; and/or, signal quality of the first signal measured within the duration T2 is greater than a fourth threshold (for example, a fourth channel quality threshold).

In some embodiments, the first signal includes one or more of the following: a beacon signal, a downlink reference signal, or a measurement signal.

In some embodiments, the first signal is a periodically transmitted signal.

In some embodiments, a transmission period of the first signal may be configured by a network device.

In some embodiments, T1 and/or the third threshold may be configured by the network device. For example, the network device may configure T1 and/or the third threshold by using broadcasting, dedicated signalling (such as RRC signalling or MAC CE signalling) of the terminal device, or the like.

In some embodiments, T2 and/or the fourth threshold may be configured by the network device. For example, the network device may configure T2 and/or the fourth threshold by using broadcasting, dedicated signalling (such as RRC signalling or MAC CE signalling) of the terminal device, or the like.

In some embodiments, for the terminal device in the RRC connected state, when switching a receiving state, the terminal device may notify the network device of a determined target receiving state. For example, the terminal device may notify the network device by using RRC signalling, MAC CE signalling, or the like.

In some embodiments, for the terminal device in the RRC connected state, when meeting a condition for switching a receiving state, the terminal device may alternatively trigger measurement reporting or UE auxiliary information reporting, to notify the network device that the terminal device meets the condition for switching the receiving state. The network device determines whether to enable the terminal device to switch the receiving state. Optionally, the terminal device may perform measurement reporting or UE auxiliary information reporting to the network device by using RRC signalling, MAC CE signalling, or the like.

### Example 3: Receiving state switching mechanism of a terminal device based on a counter and a timer

In Example 3, an LP-WUS receiver of a terminal device may detect and/or measure a first signal for a period of time, so that the terminal device determines, based on a status of detection and/or measurement performed on the first signal in the period of time, whether to switch a receiving state.

It should be noted that the solution of Example 3 may only be applicable to switching from a first receiving state to a second receiving state (that is, a case 5 in the following), or the solution of Example 3 may only be applicable to switching from the second receiving state to the first receiving state (that is, a case 6 in the following), or the solution of Example 3 may be applicable to switching between the first receiving state and the second receiving state (that is, may be applicable to both the case 5 and the case 6 in the following).

It should be further noted that the solution of Example 3 may be applicable to a terminal device in an RRC idle state, an RRC inactive state, or an RRC connected state.

The following describes a specific solution of Example 3.

Case 5: The terminal device is currently in the first receiving state (for example, the LP-WUS receiver of the terminal device is turned on and a main receiver is turned off). In this case, the terminal device determines to switch from the first receiving state to the second receiving state (for example, the main receiver of the terminal device is turned on) when one or more of the following conditions are met. The conditions may include: a quantity of times that the first signal fails to be detected within duration T3 reaches or exceeds N3; and/or, a quantity of times that signal quality of the first signal measured within the duration T3 is less than a fifth threshold (for example, a fifth channel quality threshold) reaches or exceeds N3.

Case 6: The terminal device is currently in the second receiving state. In this case, the terminal device determines to switch from the second receiving state to the first receiving state when one or more of the following conditions are met. The conditions may include: a quantity of times that the first signal is detected within duration T4 reaches or exceeds N4; and/or, a quantity of times that signal quality of the first signal measured within the duration T4 is higher than a sixth threshold (for example, a sixth channel quality threshold) reaches or exceeds N4.

In some embodiments, the first signal includes one or more of the following: a beacon signal, a downlink reference signal, or a measurement signal.

In some embodiments, the first signal is a periodically transmitted signal.

In some embodiments, a transmission period of the first signal may be configured by a network device.

In some embodiments, T3, N3, and/or the fifth threshold may be configured by the network device. For example, the network device may configure T3, N3, and/or the fifth threshold by using broadcasting, dedicated signalling (such as RRC signalling or MAC CE signalling) of the terminal device, or the like.

In some embodiments, T4, N4, and/or the sixth threshold may be configured by the network device. For example, the network device may configure T4, N4, and/or the sixth threshold by using broadcasting, dedicated signalling (such as RRC signalling or MAC CE signalling) of the terminal device, or the like.

In some embodiments, for the terminal device in the RRC connected state, when switching a receiving state, the terminal device may notify the network device of a determined target receiving state. For example, the terminal device may notify the network device by using RRC signalling, MAC CE signalling, or the like.

In some embodiments, for the terminal device in the RRC connected state, when meeting a condition for switching a receiving state, the terminal device may alternatively trigger measurement reporting or UE auxiliary information reporting, to notify the network device that the terminal device meets the condition for switching the receiving state. The network device determines whether to enable the terminal device to switch the receiving state. Optionally, the terminal device may perform measurement reporting or UE auxiliary information reporting to the network device by using RRC signalling, MAC CE signalling, or the like.

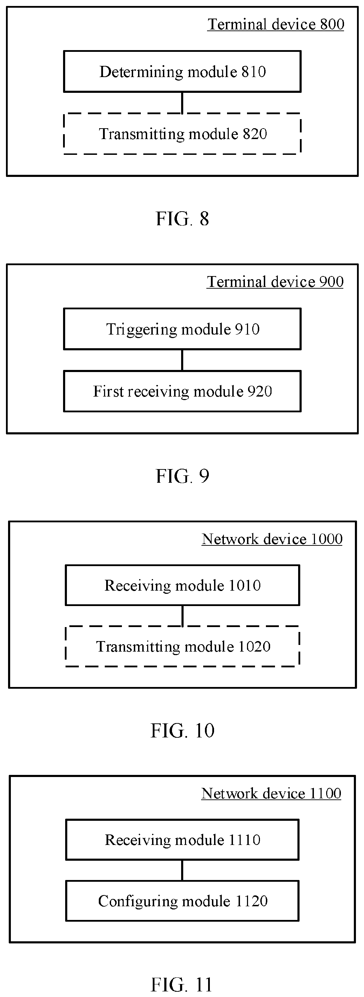

With reference to FIG. 1 to FIG. 7, the foregoing describes the method embodiments of this application in detail. With reference to FIG. 8 to FIG. 12, the following describes the apparatus embodiments of this application in detail. It should be understood that the descriptions of the method embodiment correspond to the descriptions of the apparatus embodiment. Therefore, for a part that is not described in detail, one may refer to the foregoing method embodiments.

FIG. 8 is a schematic structural diagram of a terminal device according to an embodiment of this application. The terminal device 800 shown in FIG. 8 may include a determining module 810.

The determining module 810 may be configured to determine a target receiving state, where the terminal device includes a first receiver and a second receiver, power consumption of the second receiver is less than power consumption of the first receiver, the target receiving state is a first receiving state or a second receiving state; where in the first receiving state, the first receiver is turned off or in a deep sleep state; and in the second receiving state, the first receiver is turned on and in a normal transceiving state.

Optionally, the target receiving state is determined based on a first condition, and the first condition is determined based on one or more of the following: a detection or measurement result of a first signal; a first parameter, used to indicate a threshold of a quantity of times that a first signal is consecutively not detected or measured signal quality of a first signal is consecutively less than or equal to a threshold; a second parameter, used to indicate a threshold of duration in which a first signal is consecutively not detected or measured signal quality of a first signal is consecutively less than or equal to a threshold; a third parameter, used to indicate a threshold of a quantity of times that a first signal is consecutively detected or measured signal quality of a first signal is consecutively greater than a threshold; a fourth parameter, used to indicate a threshold of duration in which a first signal is consecutively detected or measured signal quality of a first signal is consecutively greater than a threshold; a fifth parameter, used to indicate a threshold of a quantity of times that a first signal is not detected within a period of time or measured signal quality of a first signal is less than or equal to a threshold within a period of time; a sixth parameter, used to indicate a threshold of a quantity of times that a first signal is detected within a period of time or measured signal quality of a first signal is greater than a threshold within a period of time; a first counter; or a first timer.

Optionally, the first condition includes a condition for switching from the first receiving state to the second receiving state, and the first condition includes one or more of the following: a quantity of times that the first signal is consecutively not detected reaches the threshold of the quantity of times indicated by the first parameter; a quantity of times that measured signal quality of the first signal is consecutively less than or equal to a first threshold reaches the threshold of the quantity of times indicated by the first parameter; duration in which the first signal is consecutively not detected reaches the threshold of the duration indicated by the second parameter; duration in which measured signal quality of the first signal is consecutively less than or equal to a second threshold reaches the threshold of the duration indicated by the second parameter; a quantity of times that the first signal is not detected within a period of time reaches the threshold of the quantity of times indicated by the fifth parameter; or a quantity of times that measured signal quality of the first signal is less than or equal to a third threshold within a period of time reaches the threshold of the quantity of times indicated by the fifth parameter.

Optionally, the first condition includes a condition for switching from the second receiving state to the first receiving state, and the first condition includes one or more of the following: a quantity of times that the first signal is consecutively detected reaches the threshold of the quantity of times indicated by the third parameter; a quantity of times that measured signal quality of the first signal is greater than a fourth threshold reaches the threshold of the quantity of times indicated by the third parameter; duration in which the first signal is consecutively detected reaches the threshold of the duration indicated by the fourth parameter; duration in which measured signal quality of the first signal is greater than a fifth threshold reaches the threshold of the duration indicated by the fourth parameter; a quantity of times that the first signal is detected within a period of time reaches the threshold of the quantity of times indicated by the sixth parameter; or a quantity of times that measured signal quality of the first signal is greater than a sixth threshold within a period of time reaches the threshold of the quantity of times indicated by the sixth parameter.

Optionally, the first signal includes one or more of the following: a beacon signal, a downlink reference signal, or a measurement signal.

Optionally, the first signal is detected or measured by the second receiver.

Optionally, the terminal device 800 further includes a transmitting module 820. The transmitting module 820 may be configured to transmit the target receiving state to a network device.

Optionally, the terminal device is in a radio resource control RRC idle state, an RRC inactive state, or an RRC connected state.

Optionally, the terminal device 800 further includes: a receiving module, configured to receive configuration information transmitted by a network device, where the configuration information is used to instruct the terminal device to determine a configuration parameter associated with the target receiving state.

Optionally, the first receiver is a main receiver of the terminal device, and the second receiver is a low-power wake-up signal receiver of the terminal device.

FIG. 9 is a schematic structural diagram of a terminal device according to another embodiment of this application. The terminal device 900 shown in FIG. 9 may include a triggering module 910 and a first receiving module 920.

The triggering module 910 may be configured to trigger to transmit first information to a network device, where the first information is used to indicate a detection or measurement result of a first signal and/or is used to indicate that the terminal device meets a first condition.

The first receiving module 920 is configured to receive a target receiving state configured by the network device, where the terminal device includes a first receiver and a second receiver, power consumption of the second receiver is less than power consumption of the first receiver, the target receiving state is a first receiving state or a second receiving state; where in the first receiving state, the first receiver is turned off or in a deep sleep state; and in the second receiving state, the first receiver is turned on and in a normal transceiving state.

Optionally, the transmission of the first information is triggered in response to the first condition, and the first condition is determined based on one or more of the following: a detection or measurement result of a first signal; a first parameter, used to indicate a threshold of a quantity of times that a first signal is consecutively not detected or measured signal quality of a first signal is consecutively less than or equal to a threshold; a second parameter, used to indicate a threshold of duration in which a first signal is consecutively not detected or measured signal quality of a first signal is consecutively less than or equal to a threshold; a third parameter, used to indicate a threshold of a quantity of times that a first signal is consecutively detected or measured signal quality of a first signal is consecutively greater than a threshold; a fourth parameter, used to indicate a threshold of duration in which a first signal is consecutively detected or measured signal quality of a first signal is consecutively greater than a threshold; a fifth parameter, used to indicate a threshold of a quantity of times that a first signal is not detected within a period of time or measured signal quality of a first signal is less than or equal to a threshold within a period of time; a sixth parameter, used to indicate a threshold of a quantity of times that a first signal is detected within a period of time or measured signal quality of a first signal is greater than a threshold within a period of time; a first counter; or a first timer.

Optionally, the first condition includes one or more of the following: a quantity of times that the first signal is consecutively not detected reaches the threshold of the quantity of times indicated by the first parameter; a quantity of times that measured signal quality of the first signal is consecutively less than or equal to a first threshold reaches the threshold of the quantity of times indicated by the first parameter; duration in which the first signal is consecutively not detected reaches the threshold of the duration indicated by the second parameter; duration in which measured signal quality of the first signal is consecutively less than or equal to a second threshold reaches the threshold of the duration indicated by the second parameter; a quantity of times that the first signal is not detected within a period of time reaches the threshold of the quantity of times indicated by the fifth parameter; or a quantity of times that measured signal quality of the first signal is less than or equal to a third threshold within a period of time reaches the threshold of the quantity of times indicated by the fifth parameter.

Optionally, the first condition includes one or more of the following: a quantity of times that the first signal is consecutively detected reaches the threshold of the quantity of times indicated by the third parameter; a quantity of times that measured signal quality of the first signal is greater than a fourth threshold reaches the threshold of the quantity of times indicated by the third parameter; duration in which the first signal is consecutively detected reaches the threshold of the duration indicated by the fourth parameter; duration in which measured signal quality of the first signal is greater than a fifth threshold reaches the threshold of the duration indicated by the fourth parameter; a quantity of times that the first signal is detected within a period of time reaches the threshold of the quantity of times indicated by the sixth parameter; or a quantity of times that measured signal quality of the first signal is greater than a sixth threshold within a period of time reaches the threshold of the quantity of times indicated by the sixth parameter.

Optionally, the first signal includes one or more of the following: a beacon signal, a downlink reference signal, or a measurement signal.

Optionally, the first signal is detected or measured by the second receiver.

Optionally, the terminal device is in a radio resource control RRC idle state, an RRC inactive state, or an RRC connected state.

Optionally, the terminal device 900 further includes a second receiving module, configured to receive configuration information transmitted by the network device, where the configuration information is used to instruct the terminal device to determine a configuration parameter for triggering reporting of the first information.

Optionally, the first receiver is a main receiver of the terminal device, and the second receiver is a low-power wake-up signal receiver of the terminal device.

Optionally, the first information is transmitted by the terminal device in one or more of the following manners: measurement reporting, or auxiliary information reporting of the terminal device.

FIG. 10 is a schematic structural diagram of a network device according to an embodiment of this application. The network device 1000 shown in FIG. 10 may include a receiving module 1010.

The receiving module 1010 is configured to receive a target receiving state transmitted by a terminal device, where the terminal device includes a first receiver and a second receiver, power consumption of the second receiver is less than power consumption of the first receiver, the target receiving state is a first receiving state or a second receiving state; where in the first receiving state, the first receiver is turned off or in a deep sleep state; and in the second receiving state, the first receiver is turned on and in a normal transceiving state.

Optionally, the network device 1000 further includes a transmitting module 1020. The transmitting module 1020 may be configured to transmit configuration information to the terminal device, where the configuration information is used to instruct the terminal device to determine a configuration parameter associated with the target receiving state.

Optionally, the configuration parameter includes one or more of the following: a first parameter, used to indicate a threshold of a quantity of times that a first signal is consecutively not detected or measured signal quality of a first signal is consecutively less than or equal to a threshold; a second parameter, used to indicate a threshold of duration in which a first signal is consecutively not detected or measured signal quality of a first signal is consecutively less than or equal to a threshold; a third parameter, used to indicate a threshold of a quantity of times that a first signal is consecutively detected or measured signal quality of a first signal is consecutively greater than a threshold; a fourth parameter, used to indicate a threshold of duration in which a first signal is consecutively detected or measured signal quality of a first signal is consecutively greater than a threshold; a fifth parameter, used to indicate a threshold of a quantity of times that a first signal is not detected within a period of time or measured signal quality of a first signal is less than or equal to a threshold within a period of time; a sixth parameter, used to indicate a threshold of a quantity of times that a first signal is detected within a period of time or measured signal quality of a first signal is greater than a threshold within a period of time; a value of a threshold corresponding to signal quality of a first signal; a value of the foregoing period of time; or the configuration parameter of the first signal.

Optionally, the first signal includes one or more of the following: a beacon signal, a downlink reference signal, or a measurement signal.

Optionally, the first receiver is a main receiver of the terminal device, and the second receiver is a low-power wake-up signal receiver of the terminal device.

FIG. 11 is a schematic structural diagram of a network device according to another embodiment of this application. The network device 1100 shown in FIG. 11 may include a receiving module 1110 and a configuring module 1120.

The receiving module 1110 may be configured to receive first information transmitted by a terminal device, where the first information is used to indicate a detection or measurement result of a first signal and/or is used to indicate that the terminal device meets a first condition.

The configuring module 1120 may be configured to configure a target receiving state for the terminal device, where the terminal device includes a first receiver and a second receiver, power consumption of the second receiver is less than power consumption of the first receiver, the target receiving state is a first receiving state or a second receiving state; where in the first receiving state, the first receiver is turned off or in a deep sleep state; and in the second receiving state, the first receiver is turned on and in a normal transceiving state.

Optionally, the network device 1100 further includes: a transmitting module, configured to transmit configuration information to the terminal device, where the configuration information is used to instruct the terminal device to determine a configuration parameter associated with triggering of reporting of the first information.

Optionally, the configuration parameter includes one or more of the following: a first parameter, used to indicate a threshold of a quantity of times that a first signal is consecutively not detected or measured signal quality of a first signal is consecutively less than or equal to a threshold; a second parameter, used to indicate a threshold of duration in which a first signal is consecutively not detected or measured signal quality of a first signal is consecutively less than or equal to a threshold; a third parameter, used to indicate a threshold of a quantity of times that a first signal is consecutively detected or measured signal quality of a first signal is consecutively greater than a threshold; a fourth parameter, used to indicate a threshold of duration in which a first signal is consecutively detected or measured signal quality of a first signal is consecutively greater than a threshold; a fifth parameter, used to indicate a threshold of a quantity of times that a first signal is not detected within a period of time or measured signal quality of a first signal is less than or equal to a threshold within a period of time; a sixth parameter, used to indicate a threshold of a quantity of times that a first signal is detected within a period of time or measured signal quality of a first signal is greater than a threshold within a period of time; a value of a threshold corresponding to signal quality of a first signal; a value of the foregoing period of time; or the configuration parameter of the first signal.

Optionally, the first signal includes one or more of the following: a beacon signal, a downlink reference signal, or a measurement signal.

Optionally, the first receiver is a main receiver of the terminal device, and the second receiver is a low-power wake-up signal receiver of the terminal device.

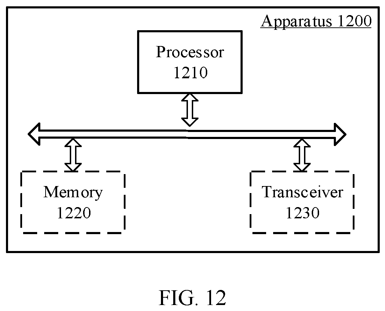

FIG. 12 is a schematic structural diagram of a communications apparatus according to an embodiment of this application. A dashed line in FIG. 12 indicates that the unit or module is optional. The apparatus 1200 may be configured to implement the method described in the foregoing method embodiments. The apparatus 1200 may be a chip, a terminal device, or a network device.

The apparatus 1200 may include one or more processors 1210. The processor 1210 may support the apparatus 1200 to implement a method described in the foregoing method embodiments. The processor 1210 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1200 may further include one or more memories 1220. The memory 1220 stores a program, and the program may be executed by the processor 1210, so that the processor 1210 executes the method described in the foregoing method embodiments. The memory 1220 may be separate from or integrated into the processor 1210.

The apparatus 1200 may further include a transceiver 1230. The processor 1210 may communicate with another device or chip by using the transceiver 1230. For example, the processor 1210 may transmit data to and receive data from another device or chip by using the transceiver 1230.

An embodiment of this application further provides a computer-readable storage medium, configured to store a program. The computer-readable storage medium may be applied to a terminal or a network device provided in embodiments of this application, and the program causes the computer to execute the method executed by the terminal or the network device in embodiments of this application.

An embodiment of this application further provides a computer program product. The computer program product includes a program. The computer program product may be applied to a terminal or a network device provided in embodiments of this application, and the program causes the computer to execute the method executed by the terminal or the network device in embodiments of this application.

An embodiment of this application further provides a computer program. The computer program may be applied to a terminal or a network device provided in embodiments of this application, and the computer program causes the computer to execute the method executed by the terminal or the network device in embodiments of this application.

It should be understood that the terms "system" and "network" in this application may be used interchangeably. In addition, the terms used in this application are merely used to explain specific embodiments of this application, and are not intended to limit this application. The terms "first", "second", "third", "fourth", and the like in the specification, claims, and drawings of this application are used for distinguishing different objects from each other, rather than defining a specific order. In addition, the terms "include" and "have" and any variations thereof are intended to cover a non-exclusive inclusion.

In embodiments of this application, the "indication" mentioned may be a direct indication or an indirect indication, or indicate an association. For example, A indicates B, which may indicate that A directly indicates B, for example, B may be obtained by using A. Alternatively, it may indicate that A indirectly indicates B, for example, A indicates C, and B may be obtained by using C. It may further indicate that there is an association relationship between A and B.

In embodiments of this application, "B corresponding to A" means that B is associated with A, and B may be determined based on A. However, it should be further understood that determining B based on A does not mean determining B based on only A, but instead B may be determined based on A and/or other information.

In embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, "pre-defining" or "pre-configuring" can be implemented by pre-storing corresponding code or a corresponding table in a device (for example, including a terminal device and a network device) or in other manners that can be used for indicating related information. A specific implementation thereof is not limited in this application. For example, pre-defining may indicate being defined in a protocol.

In embodiments of this application, the "protocol" may refer to a standard protocol in the communication field, which may include, for example, an LTE protocol, an NR protocol, and a related protocol applied to a future communications system. This is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" herein generally indicates an "or" relationship between the associated objects.

In embodiments of this application, sequence numbers of the foregoing processes do not mean execution sequences. The execution sequences of the processes shall be determined based on functions and internal logic of the processes, and shall not constitute any limitation on the implementation processes of embodiments of this application.

In the several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented by using some interfaces. The indirect couplings or communication connections between the apparatuses or units may be implemented in electronic, mechanical, or other forms.

Units described as separate components may be or may not be physically separate, and components displayed as units may be or may not be physical units, that is, may be located in one place or distributed on a plurality of network units. Some or all of the units may be selected according to actual needs to achieve the objective of the solutions of the embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for wireless communication, comprising:
determining, by a terminal device, a target receiving state, wherein the terminal device comprises a first receiver and a second receiver, power consumption of the second receiver is less than power consumption of the first receiver, the target receiving state is a first receiving state or a second receiving state, wherein in the first receiving state, the first receiver is turned off or in a deep sleep state; and in the second receiving state, the first receiver is turned on and in a normal transceiving state.

2. The method according to claim 1, wherein the target receiving state is determined based on a first condition, and the first condition is determined based on one or more of following:
a detection or measurement result of a first signal;
a first parameter, used to indicate a threshold of a quantity of times that a first signal is consecutively not detected or measured signal quality of a first signal is consecutively less than or equal to a threshold;
a second parameter, used to indicate a threshold of duration in which a first signal is consecutively not detected or measured signal quality of a first signal is consecutively less than or equal to a threshold;
a third parameter, used to indicate a threshold of a quantity of times that a first signal is consecutively detected or measured signal quality of a first signal is consecutively greater than a threshold;
a fourth parameter, used to indicate a threshold of duration in which a first signal is consecutively detected or measured signal quality of a first signal is consecutively greater than a threshold;
a fifth parameter, used to indicate a threshold of a quantity of times that a first signal is not detected within a period of time or measured signal quality of a first signal is less than or equal to a threshold within a period of time;
a sixth parameter, used to indicate a threshold of a quantity of times that a first signal is detected within a period of time or measured signal quality of a first signal is greater than a threshold within a period of time;
a first counter; or
a first timer.

3. The method according to claim 2, wherein the first condition comprises a condition for switching from the first receiving state to the second receiving state, and the first condition comprises one or more of following:
a quantity of times that the first signal is consecutively not detected reaches the threshold of the quantity of times indicated by the first parameter;
a quantity of times that measured signal quality of the first signal is consecutively less than or equal to a first threshold reaches the threshold of the quantity of times indicated by the first parameter;
duration in which the first signal is consecutively not detected reaches the threshold of the duration indicated by the second parameter;
duration in which measured signal quality of the first signal is consecutively less than or equal to a second threshold reaches the threshold of the duration indicated by the second parameter;
a quantity of times that the first signal is not detected within a period of time reaches the threshold of the quantity of times indicated by the fifth parameter; or
a quantity of times that measured signal quality of the first signal is less than or equal to a third threshold within a period of time reaches the threshold of the quantity of times indicated by the fifth parameter.

4. The method according to claim 2 or 3, wherein the first condition comprises a condition for switching from the second receiving state to the first receiving state, and the first condition comprises one or more of following:
a quantity of times that the first signal is consecutively detected reaches the threshold of the quantity of times indicated by the third parameter;
a quantity of times that measured signal quality of the first signal is consecutively greater than a fourth threshold reaches the threshold of the quantity of times indicated by the third parameter;
duration in which the first signal is consecutively detected reaches the threshold of the duration indicated by the fourth parameter;
duration in which measured signal quality of the first signal is consecutively greater than a fifth threshold reaches the threshold of the duration indicated by the fourth parameter;
a quantity of times that the first signal is detected within a period of time reaches the threshold of the quantity of times indicated by the sixth parameter; or
a quantity of times that measured signal quality of the first signal is greater than a sixth threshold within a period of time reaches the threshold of the quantity of times indicated by the sixth parameter.

5. The method according to any one of claims 2 to 4, wherein the first signal comprises one or more of following: a beacon signal, a downlink reference signal, or a measurement signal.

6. The method according to any one of claims 2 to 5, wherein the first signal is detected or measured by the second receiver.

7. The method according to any one of claims 1 to 6, wherein the method further comprises:
transmitting, by the terminal device, the target receiving state to a network device.

8. The method according to any one of claims 1 to 7, wherein the terminal device is in a radio resource control RRC idle state, an RRC inactive state, or an RRC connected state.

9. The method according to any one of claims 1 to 8, wherein the method further comprises:
receiving, by the terminal device, configuration information transmitted by a network device, wherein the configuration information is used to instruct the terminal device to determine a configuration parameter associated with the target receiving state.

10. The method according to any one of claims 1 to 9, wherein the first receiver is a main receiver of the terminal device, and the second receiver is a low-power wake-up signal receiver of the terminal device.

11. A method for wireless communication, comprising:
triggering, by a terminal device, to transmit first information to a network device, wherein the first information is used to indicate a detection or measurement result of a first signal and/or is used to indicate that the terminal device meets a first condition; and
receiving, by the terminal device, a target receiving state configured by the network device,
wherein the terminal device comprises a first receiver and a second receiver, power consumption of the second receiver is less than power consumption of the first receiver, the target receiving state is a first receiving state or a second receiving state; wherein in the first receiving state, the first receiver is turned off or in a deep sleep state; and in the second receiving state, the first receiver is turned on and in a normal transceiving state.

12. The method according to claim 11, wherein transmission of the first information is triggered in response to the first condition, and the first condition is determined based on one or more of following:
a detection or measurement result of a first signal;
a first parameter, used to indicate a threshold of a quantity of times that a first signal is consecutively not detected or measured signal quality of a first signal is consecutively less than or equal to a threshold;
a second parameter, used to indicate a threshold of duration in which a first signal is consecutively not detected or measured signal quality of a first signal is consecutively less than or equal to a threshold;
a third parameter, used to indicate a threshold of a quantity of times that a first signal is consecutively detected or measured signal quality of a first signal is consecutively greater than a threshold;
a fourth parameter, used to indicate a threshold of duration in which a first signal is consecutively detected or measured signal quality of a first signal is consecutively greater than a threshold;
a fifth parameter, used to indicate a threshold of a quantity of times that a first signal is not detected within a period of time or measured signal quality of a first signal is less than or equal to a threshold within a period of time;
a sixth parameter, used to indicate a threshold of a quantity of times that a first signal is detected within a period of time or measured signal quality of a first signal is greater than a threshold within a period of time;
a first counter; or
a first timer.

13. The method according to claim 11 or 12, wherein the first condition comprises one or more of following:
a quantity of times that the first signal is consecutively not detected reaches the threshold of the quantity of times indicated by the first parameter;
a quantity of times that measured signal quality of the first signal is consecutively less than or equal to a first threshold reaches the threshold of the quantity of times indicated by the first parameter;
duration in which the first signal is consecutively not detected reaches the threshold of the duration indicated by the second parameter;
duration in which measured signal quality of the first signal is consecutively less than or equal to a second threshold reaches the threshold of the duration indicated by the second parameter;
a quantity of times that the first signal is not detected within a period of time reaches the threshold of the quantity of times indicated by the fifth parameter; or
a quantity of times that measured signal quality of the first signal is less than or equal to a third threshold within a period of time reaches the threshold of the quantity of times indicated by the fifth parameter.

14. The method according to any one of claims 11 to 13, wherein the first condition comprises one or more of following:
a quantity of times that the first signal is consecutively detected reaches the threshold of the quantity of times indicated by the third parameter;
a quantity of times that measured signal quality of the first signal is consecutively greater than a fourth threshold reaches the threshold of the quantity of times indicated by the third parameter;
duration in which the first signal is consecutively detected reaches the threshold of the duration indicated by the fourth parameter;
duration in which measured signal quality of the first signal is consecutively greater than a fifth threshold reaches the threshold of the duration indicated by the fourth parameter;
a quantity of times that the first signal is detected within a period of time reaches the threshold of the quantity of times indicated by the sixth parameter; or
a quantity of times that measured signal quality of the first signal is greater than a sixth threshold within a period of time reaches the threshold of the quantity of times indicated by the sixth parameter.

15. The method according to any one of claims 11 to 14, wherein the first signal comprises one or more of following: a beacon signal, a downlink reference signal, or a measurement signal.

16. The method according to any one of claims 11 to 15, wherein the first signal is detected or measured by the second receiver.

17. The method according to any one of claims 11 to 16, wherein the terminal device is in a radio resource control RRC idle state, an RRC inactive state, or an RRC connected state.

18. The method according to any one of claims 11 to 17, wherein the method further comprises:
receiving, by the terminal device, configuration information transmitted by the network device, wherein the configuration information is used to instruct the terminal device to determine a configuration parameter for triggering reporting of the first information.

19. The method according to any one of claims 11 to 18, wherein the first receiver is a main receiver of the terminal device, and the second receiver is a low-power wake-up signal receiver of the terminal device.

20. The method according to any one of claims 11 to 19, wherein the first information is transmitted by the terminal device in one or more of following manners: measurement reporting, or auxiliary information reporting of the terminal device.

21. A method for wireless communication, comprising:
receiving, by a network device, a target receiving state transmitted by a terminal device,
wherein the terminal device comprises a first receiver and a second receiver, power consumption of the second receiver is less than power consumption of the first receiver, the target receiving state is a first receiving state or a second receiving state; wherein in the first receiving state, the first receiver is turned off or in a deep sleep state; and in the second receiving state, the first receiver is turned on and in a normal transceiving state.

22. The method according to claim 21, wherein the method further comprises:
transmitting, by the network device, configuration information to the terminal device, wherein the configuration information is used to instruct the terminal device to determine a configuration parameter associated with the target receiving state.

23. The method according to claim 22, wherein the configuration parameter comprises one or more of following:
a first parameter, used to indicate a threshold of a quantity of times that a first signal is consecutively not detected or measured signal quality of a first signal is consecutively less than or equal to a threshold;
a second parameter, used to indicate a threshold of duration in which a first signal is consecutively not detected or measured signal quality of a first signal is consecutively less than or equal to a threshold;
a third parameter, used to indicate a threshold of a quantity of times that a first signal is consecutively detected or measured signal quality of a first signal is consecutively greater than a threshold;
a fourth parameter, used to indicate a threshold of duration in which a first signal is consecutively detected or measured signal quality of a first signal is consecutively greater than a threshold;
a fifth parameter, used to indicate a threshold of a quantity of times that a first signal is not detected within a period of time or measured signal quality of a first signal is less than or equal to a threshold within a period of time;
a sixth parameter, used to indicate a threshold of a quantity of times that a first signal is detected within a period of time or measured signal quality of a first signal is greater than a threshold within a period of time;
a value of a threshold corresponding to signal quality of a first signal;
a value of the period of time; or
a configuration parameter of the first signal.

24. The method according to claim 23, wherein the first signal comprises one or more of following: a beacon signal, a downlink reference signal, or a measurement signal.

25. The method according to any one of claims 21 to 24, wherein the first receiver is a main receiver of the terminal device, and the second receiver is a low-power wake-up signal receiver of the terminal device.

26. A method for wireless communication, comprising:
receiving, by a network device, first information transmitted by a terminal device, wherein the first information is used to indicate a detection or measurement result of a first signal and/or is used to indicate that the terminal device meets a first condition; and
configuring, by the network device, a target receiving state for the terminal device,
wherein the terminal device comprises a first receiver and a second receiver, power consumption of the second receiver is less than power consumption of the first receiver, the target receiving state is a first receiving state or a second receiving state; wherein in the first receiving state, the first receiver is turned off or in a deep sleep state; and in the second receiving state, the first receiver is turned on and in a normal transceiving state.

27. The method according to claim 26, wherein the method further comprises:
transmitting, by the network device, configuration information to the terminal device, wherein the configuration information is used to instruct the terminal device to determine a configuration parameter associated with triggering of reporting of the first information.

28. The method according to claim 27, wherein the configuration parameter comprises one or more of following:
a first parameter, used to indicate a threshold of a quantity of times that a first signal is consecutively not detected or measured signal quality of a first signal is consecutively less than or equal to a threshold;
a second parameter, used to indicate a threshold of duration in which a first signal is consecutively not detected or measured signal quality of a first signal is consecutively less than or equal to a threshold;
a third parameter, used to indicate a threshold of a quantity of times that a first signal is consecutively detected or measured signal quality of a first signal is consecutively greater than a threshold;
a fourth parameter, used to indicate a threshold of duration in which a first signal is consecutively detected or measured signal quality of a first signal is consecutively greater than a threshold;
a fifth parameter, used to indicate a threshold of a quantity of times that a first signal is not detected within a period of time or measured signal quality of a first signal is less than or equal to a threshold within a period of time;
a sixth parameter, used to indicate a threshold of a quantity of times that a first signal is detected within a period of time or measured signal quality of a first signal is greater than a threshold within a period of time;
a value of a threshold corresponding to signal quality of a first signal;
a value of the period of time; or
a configuration parameter of the first signal.

29. The method according to any one of claims 26 to 28, wherein the first signal comprises one or more of following: a beacon signal, a downlink reference signal, or a measurement signal.

30. The method according to any one of claims 26 to 29, wherein the first receiver is a main receiver of the terminal device, and the second receiver is a low-power wake-up signal receiver of the terminal device.

31. A terminal device, comprising:
a determining module, configured to determine a target receiving state, wherein the terminal device comprises a first receiver and a second receiver, power consumption of the second receiver is less than power consumption of the first receiver, the target receiving state is a first receiving state or a second receiving state; wherein in the first receiving state, the first receiver is turned off or in a deep sleep state; and in the second receiving state, the first receiver is turned on and in a normal transceiving state.

32. The terminal device according to claim 31, wherein the target receiving state is determined based on a first condition, and the first condition is determined based on one or more of following:
a detection or measurement result of a first signal;
a first parameter, used to indicate a threshold of a quantity of times that a first signal is consecutively not detected or measured signal quality of a first signal is consecutively less than or equal to a threshold;
a second parameter, used to indicate a threshold of duration in which a first signal is consecutively not detected or measured signal quality of a first signal is consecutively less than or equal to a threshold;
a third parameter, used to indicate a threshold of a quantity of times that a first signal is consecutively detected or measured signal quality of a first signal is consecutively greater than a threshold;
a fourth parameter, used to indicate a threshold of duration in which a first signal is consecutively detected or measured signal quality of a first signal is consecutively greater than a threshold;
a fifth parameter, used to indicate a threshold of a quantity of times that a first signal is not detected within a period of time or measured signal quality of a first signal is less than or equal to a threshold within a period of time;
a sixth parameter, used to indicate a threshold of a quantity of times that a first signal is detected within a period of time or measured signal quality of a first signal is greater than a threshold within a period of time;
a first counter; or
a first timer.

33. The terminal device according to claim 32, wherein the first condition comprises a condition for switching from the first receiving state to the second receiving state, and the first condition comprises one or more of following:
a quantity of times that the first signal is consecutively not detected reaches the threshold of the quantity of times indicated by the first parameter;
a quantity of times that measured signal quality of the first signal is consecutively less than or equal to a first threshold reaches the threshold of the quantity of times indicated by the first parameter;
duration in which the first signal is consecutively not detected reaches the threshold of the duration indicated by the second parameter;
duration in which measured signal quality of the first signal is consecutively less than or equal to a second threshold reaches the threshold of the duration indicated by the second parameter;
a quantity of times that the first signal is not detected within a period of time reaches the threshold of the quantity of times indicated by the fifth parameter; or
a quantity of times that measured signal quality of the first signal is less than or equal to a third threshold within a period of time reaches the threshold of the quantity of times indicated by the fifth parameter.

34. The terminal device according to claim 32 or 33, wherein the first condition comprises a condition for switching from the second receiving state to the first receiving state, and the first condition comprises one or more of following:
a quantity of times that the first signal is consecutively detected reaches the threshold of the quantity of times indicated by the third parameter;
a quantity of times that measured signal quality of the first signal is consecutively greater than a fourth threshold reaches the threshold of the quantity of times indicated by the third parameter;
duration in which the first signal is consecutively detected reaches the threshold of the duration indicated by the fourth parameter;
duration in which measured signal quality of the first signal is consecutively greater than a fifth threshold reaches the threshold of the duration indicated by the fourth parameter;
a quantity of times that the first signal is detected within a period of time reaches the threshold of the quantity of times indicated by the sixth parameter; or
a quantity of times that measured signal quality of the first signal is greater than a sixth threshold within a period of time reaches the threshold of the quantity of times indicated by the sixth parameter.

35. The terminal device according to any one of claims 32 to 34, wherein the first signal comprises one or more of following: a beacon signal, a downlink reference signal, or a measurement signal.

36. The terminal device according to any one of claims 32 to 35, wherein the first signal is detected or measured by the second receiver.

37. The terminal device according to any one of claims 31 to 36, wherein the terminal device further comprises:
a transmitting module, configured to transmit the target receiving state to a network device.

38. The terminal device according to any one of claims 31 to 37, wherein the terminal device is in a radio resource control RRC idle state, an RRC inactive state, or an RRC connected state.

39. The terminal device according to any one of claims 31 to 38, wherein the terminal device further comprises:
a receiving module, configured to receive configuration information transmitted by a network device, wherein the configuration information is used to instruct the terminal device to determine a configuration parameter associated with the target receiving state.

40. The terminal device according to any one of claims 31 to 39, wherein the first receiver is a main receiver of the terminal device, and the second receiver is a low-power wake-up signal receiver of the terminal device.

41. A terminal device, comprising:
a triggering module, configured to trigger to transmit first information to a network device, wherein the first information is used to indicate a detection or measurement result of a first signal and/or is used to indicate that the terminal device meets a first condition; and
a first receiving module, configured to receive a target receiving state configured by the network device,
wherein the terminal device comprises a first receiver and a second receiver, power consumption of the second receiver is less than power consumption of the first receiver, the target receiving state is a first receiving state or a second receiving state; wherein in the first receiving state, the first receiver is turned off or in a deep sleep state; and in the second receiving state, the first receiver is turned on and in a normal transceiving state.

42. The terminal device according to claim 41, wherein transmission of the first information is triggered in response to the first condition, and the first condition is determined based on one or more of following:
a detection or measurement result of a first signal;
a first parameter, used to indicate a threshold of a quantity of times that a first signal is consecutively not detected or measured signal quality of a first signal is consecutively less than or equal to a threshold;
a second parameter, used to indicate a threshold of duration in which a first signal is consecutively not detected or measured signal quality of a first signal is consecutively less than or equal to a threshold;
a third parameter, used to indicate a threshold of a quantity of times that a first signal is consecutively detected or measured signal quality of a first signal is consecutively greater than a threshold;
a fourth parameter, used to indicate a threshold of duration in which a first signal is consecutively detected or measured signal quality of a first signal is consecutively greater than a threshold;
a fifth parameter, used to indicate a threshold of a quantity of times that a first signal is not detected within a period of time or measured signal quality of a first signal is less than or equal to a threshold within a period of time;
a sixth parameter, used to indicate a threshold of a quantity of times that a first signal is detected within a period of time or measured signal quality of a first signal is greater than a threshold within a period of time;
a first counter; or
a first timer.

43. The terminal device according to claim 41 or 42, wherein the first condition comprises one or more of following:
a quantity of times that the first signal is consecutively not detected reaches the threshold of the quantity of times indicated by the first parameter;
a quantity of times that measured signal quality of the first signal is consecutively less than or equal to a first threshold reaches the threshold of the quantity of times indicated by the first parameter;
duration in which the first signal is consecutively not detected reaches the threshold of the duration indicated by the second parameter;
duration in which measured signal quality of the first signal is consecutively less than or equal to a second threshold reaches the threshold of the duration indicated by the second parameter;
a quantity of times that the first signal is not detected within a period of time reaches the threshold of the quantity of times indicated by the fifth parameter; or
a quantity of times that measured signal quality of the first signal is less than or equal to a third threshold within a period of time reaches the threshold of the quantity of times indicated by the fifth parameter.

44. The terminal device according to any one of claims 41 to 43, wherein the first condition comprises one or more of following:
a quantity of times that the first signal is consecutively detected reaches the threshold of the quantity of times indicated by the third parameter;
a quantity of times that measured signal quality of the first signal is consecutively greater than a fourth threshold reaches the threshold of the quantity of times indicated by the third parameter;
duration in which the first signal is consecutively detected reaches the threshold of the duration indicated by the fourth parameter;
duration in which measured signal quality of the first signal is consecutively greater than a fifth threshold reaches the threshold of the duration indicated by the fourth parameter;
a quantity of times that the first signal is detected within a period of time reaches the threshold of the quantity of times indicated by the sixth parameter; or
a quantity of times that measured signal quality of the first signal is greater than a sixth threshold within a period of time reaches the threshold of the quantity of times indicated by the sixth parameter.

45. The terminal device according to any one of claims 41 to 44, wherein the first signal comprises one or more of following: a beacon signal, a downlink reference signal, or a measurement signal.

46. The terminal device according to any one of claims 41 to 45, wherein the first signal is detected or measured by the second receiver.

47. The terminal device according to any one of claims 41 to 46, wherein the terminal device is in a radio resource control RRC idle state, an RRC inactive state, or an RRC connected state.

48. The terminal device according to any one of claims 41 to 47, wherein the terminal device further comprises:
a second receiving module, configured to receive configuration information transmitted by the network device, wherein the configuration information is used to instruct the terminal device to determine a configuration parameter for triggering reporting of the first information.

49. The terminal device according to any one of claims 41 to 48, wherein the first receiver is a main receiver of the terminal device, and the second receiver is a low-power wake-up signal receiver of the terminal device.

50. The terminal device according to any one of claims 41 to 49, wherein the first information is transmitted by the terminal device in one or more of following manners:
measurement reporting, or auxiliary information reporting of the terminal device.

51. A network device, comprising:
a receiving module, configured to receive a target receiving state transmitted by a terminal device,
wherein the terminal device comprises a first receiver and a second receiver, power consumption of the second receiver is less than power consumption of the first receiver, the target receiving state is a first receiving state or a second receiving state; wherein in the first receiving state, the first receiver is turned off or in a deep sleep state; and in the second receiving state, the first receiver is turned on and in a normal transceiving state.

52. The network device according to claim 51, wherein the network device further comprises:
a transmitting module, configured to transmit configuration information to the terminal device, wherein the configuration information is used to instruct the terminal device to determine a configuration parameter associated with the target receiving state.

53. The network device according to claim 52, wherein the configuration parameter comprises one or more of following:
a first parameter, used to indicate a threshold of a quantity of times that a first signal is consecutively not detected or measured signal quality of a first signal is consecutively less than or equal to a threshold;
a second parameter, used to indicate a threshold of duration in which a first signal is consecutively not detected or measured signal quality of a first signal is consecutively less than or equal to a threshold;
a third parameter, used to indicate a threshold of a quantity of times that a first signal is consecutively detected or measured signal quality of a first signal is consecutively greater than a threshold;
a fourth parameter, used to indicate a threshold of duration in which a first signal is consecutively detected or measured signal quality of a first signal is consecutively greater than a threshold;
a fifth parameter, used to indicate a threshold of a quantity of times that a first signal is not detected within a period of time or measured signal quality of a first signal is less than or equal to a threshold within a period of time;
a sixth parameter, used to indicate a threshold of a quantity of times that a first signal is detected within a period of time or measured signal quality of a first signal is greater than a threshold within a period of time;
a value of a threshold corresponding to signal quality of a first signal;
a value of the period of time; or
a configuration parameter of the first signal.

54. The network device according to claim 53, wherein the first signal comprises one or more of following: a beacon signal, a downlink reference signal, or a measurement signal.

55. The network device according to any one of claims 51 to 54, wherein the first receiver is a main receiver of the terminal device, and the second receiver is a low-power wake-up signal receiver of the terminal device.

56. A network device, comprising:
a receiving module, configured to receive first information transmitted by a terminal device, wherein the first information is used to indicate a detection or measurement result of a first signal and/or is used to indicate that the terminal device meets a first condition; and
a configuring module, configured to configure a target receiving state for the terminal device,
wherein the terminal device comprises a first receiver and a second receiver, power consumption of the second receiver is less than power consumption of the first receiver, the target receiving state is a first receiving state or a second receiving state; wherein in the first receiving state, the first receiver is turned off or in a deep sleep state; and in the second receiving state, the first receiver is turned on and in a normal transceiving state.

57. The network device according to claim 56, wherein the network device further comprises:
a transmitting module, configured to transmit configuration information to the terminal device, wherein the configuration information is used to instruct the terminal device to determine a configuration parameter associated with triggering of reporting of the first information.

58. The network device according to claim 57, wherein the configuration parameter comprises one or more of following:
a first parameter, used to indicate a threshold of a quantity of times that a first signal is consecutively not detected or measured signal quality of a first signal is consecutively less than or equal to a threshold;
a second parameter, used to indicate a threshold of duration in which a first signal is consecutively not detected or measured signal quality of a first signal is consecutively less than or equal to a threshold;
a third parameter, used to indicate a threshold of a quantity of times that a first signal is consecutively detected or measured signal quality of a first signal is consecutively greater than a threshold;
a fourth parameter, used to indicate a threshold of duration in which a first signal is consecutively detected or measured signal quality of a first signal is consecutively greater than a threshold;
a fifth parameter, used to indicate a threshold of a quantity of times that a first signal is not detected within a period of time or measured signal quality of a first signal is less than or equal to a threshold within a period of time;
a sixth parameter, used to indicate a threshold of a quantity of times that a first signal is detected within a period of time or measured signal quality of a first signal is greater than a threshold within a period of time;
a value of a threshold corresponding to signal quality of a first signal;
a value of the period of time; or
a configuration parameter of the first signal.

59. The network device according to any one of claims 56 to 58, wherein the first signal comprises one or more of following: a beacon signal, a downlink reference signal, or a measurement signal.

60. The network device according to any one of claims 56 to 59, wherein the first receiver is a main receiver of the terminal device, and the second receiver is a low-power wake-up signal receiver of the terminal device.

61. A terminal device, comprising a memory and a processor, wherein the memory is configured to store a program, and the processor is configured to invoke the program in the memory, to cause the terminal device to execute the method according to any one of claims 1 to 20.

62. A network device, comprising a memory, a processor, and a transceiver, wherein the memory is configured to store a program, and the processor is configured to invoke the program in the memory, to cause the network device to execute the method according to any one of claims 21 to 30.

63. An apparatus, comprising a processor, configured to invoke a program from a memory, to cause the apparatus to execute the method according to any one of claims 1 to 30.

64. A chip, comprising a processor, configured to invoke a program from a memory, to cause a device on which the chip is installed to execute the method according to any one of claims 1 to 30.

65. A computer-readable storage medium, wherein the computer-readable storage medium stores a program, and the program causes a computer to execute the method according to any one of claims 1 to 30.

66. A computer program product, comprising a program, wherein the program causes a computer to execute the method according to any one of claims 1 to 30.

67. A computer program, wherein the computer program causes a computer to execute the method according to any one of claims 1 to 30.
